(19) Europäisches Patentamt / European Patent Office / Office européen des brevets

(11) **EP 4 087 061 B1**

(12) **EUROPEAN PATENT SPECIFICATION**

(45) Date of publication and mention of the grant of the patent:
**26.11.2025 Bulletin 2025/48**

(21) Application number: **20916182.7**

(22) Date of filing: **25.12.2020**

(51) International Patent Classification (IPC):
*H01Q 21/00* (2006.01)     *H04B 7/0408* (2017.01)
*H04B 7/06* (2006.01)     *H04B 1/525* (2015.01)

(52) Cooperative Patent Classification (CPC):
**H01Q 21/20; H04B 1/525; H04B 7/0408; H04B 7/0613;** H04L 5/14

(86) International application number:
**PCT/CN2020/139673**

(87) International publication number:
**WO 2021/147613 (29.07.2021 Gazette 2021/30)**

(54) **FULL-DUPLEX COMMUNICATION METHOD AND APPARATUS**

VOLLDUPLEXKOMMUNIKATIONSVERFAHREN UND -VORRICHTUNG

PROCÉDÉ ET APPAREIL DE COMMUNICATION BIDIRECTIONNELLE SIMULTANÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2020   CN 202010076790**

(43) Date of publication of application:
**09.11.2022   Bulletin 2022/45**

(73) Proprietor: **Huawei Technologies Co., Ltd.**
**Shenzhen, Guangdong 518129 (CN)**

(72) Inventors:
• **ZHANG, Zhuofan**
  **Shenzhen, Guangdong 518129 (CN)**
• **HU, Liang**
  **Shenzhen, Guangdong 518129 (CN)**
• **WANG, Jun**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
WO-A1-2016/036270     WO-A1-2019/059406
CN-A- 106 099 391     CN-A- 108 282 208
CN-A- 109 728 448

• ZHANG YI-MING ET AL: "Analyses and Full-Duplex Applications of Circularly Polarized OAM Arrays Using Sequentially Rotated Configuration", IEEE TRANSACTIONS ON ANTENNAS AND PROPAGATION, IEEE, USA, vol. 66, no. 12, 1 December 2018 (2018-12-01), pages 7010 - 7020, XP011702384, ISSN: 0018-926X, [retrieved on 20181129], DOI: 10.1109/TAP.2018.2872169
• DOU HAIPENG;ZHANG WENMEI: "A Dual-Band Microstrip Antenna Generating Vortex Electromagnetic Waves", JOURNAL OF TEST AND MEASUREMENT TECHNOLOGY, vol. 32, no. 1, 28 February 2018 (2018-02-28), pages 45 - 49, XP055831611, ISSN: 1671-17449, DOI: 10.3969/j.issn.1671-7449.2018.01.009

**Description**

**TECHNICAL FIELD**

This application relates to the field of wireless communications technologies, and in particular, to a full-duplex communication method and apparatus.

**BACKGROUND**

As fewer spectrum resources are available while applications require a higher rate of wireless transmission, a full-duplex technology gradually becomes a potential technical means to double spectral efficiency. A relatively convenient method for implementing high isolation between transmit and receive ports is designing a placement manner of an antenna array for passive superposition elimination in a propagation domain, so that self-interference signal cancellation in the full-duplex technology can be implemented.

An orbital angular momentum (Orbital Angular Momentum, OAM) is an inherent attribute of an electromagnetic wave, and corresponds to a spiral phase wavefront of a beam in space. Electromagnetic waves carrying different OAM states are orthogonal to each other when transmitted coaxially in space. Therefore, a conventional orbital angular momentum electromagnetic wave communication theory holds that modulating different information to electromagnetic waves in different OAM states for multiplexing can increase a channel capacity of a wireless communication system. However, it is difficult to use conventional OAM electromagnetic wave communication in an actual communication system due to problems such as performance deterioration caused by beam divergence, an energy hole in a beam center, and an eccentric or off-axis state.

A relatively convenient OAM beam generation method is generating OAM beams by using an antenna array. Therefore, how to properly design an antenna array and a feeding network of the antenna array to implement self-interference cancellation in a propagation domain by using orthogonality of OAM beams is a problem that needs to be resolved in full-duplex communication.

Document Zhang et al. "Analyses and Full-Duplex Applications of Circularly Polarized OAM Arrays Using Sequentially Rotated Configuration", XP011702384, describes an analyses of circularly polarized orbital angular momentum (OAM) ring arrays using sequentially rotated configurations.

Document WO 2016/036270 A1 to a transceiver arrangement for transmitting and receiving electromagnetic signals in a multiple-input-multiple-output, MIMO, system, comprising antenna elements arranged in rotational symmetry on a circular line in a common plane, wherein said antenna elements are respectively identical in shape, said shape being axial symmetric, and encoding means adapted to encode electromagnetic signals to be transmitted via said antenna elements with orthogonal vectors, and decoding means adapted to decode electromagnetic signals received via said antenna elements with said orthogonal vectors, said orthogonal vectors being selected to reduce interference caused by parasitic coupling between said antenna elements. The present invention further refers to a corresponding method.

**SUMMARY**

Embodiments of this application provides a full-duplex communication method and apparatus, to implement self-interference cancellation in a full-duplex communication process. The invention is defined by the attached set of claims.

According to a first aspect, an embodiment of this application provides a full-duplex communication method, including: transmitting transmitted beams in different orbital angular momentum OAM states by using a transmit antenna array, where the transmit antenna array is a uniform circular array UCA; receiving received beams in different OAM states by using a receive antenna array, where the receive antenna array is a UCA, an antenna array includes the transmit antenna array and the receive antenna array, the antenna array meets a preset condition, and the preset condition includes: a quantity of transmit antennas of the transmit antenna array is equal to a quantity of receive antennas of the receive antenna array, and the OAM states of the transmitted beams are not equal to opposite numbers of the OAM states of the received beams; and feeding the transmit antenna array and synthesizing signals of the receive antenna array by using a feeding network.

Specifically, the feeding network feeds the transmit UCA, the transmit UCA may transmit transmitted beams in different OAM states, the feeding network synthesizes signals of the receive UCA, and the receive UCA may receive received beams in different OAM states. The transmit UCA and the receive UCA are concentrically and coaxially placed. A radius of the transmit UCA may be the same as or different from a radius of the receive UCA. For example, if the radius of the transmit UCA is the same as the radius of the receive UCA, the transmit UCA and the receive UCA may share an antenna array, or the transmit UCA and the receive UCA may use independent antenna arrays.

The feeding network may include a transmitter feeding network and a receiver feeding network. The transmitter feeding network and the receiver feeding network may share a feeding network, or the transmitter feeding network and the receiver feeding network may use independent feeding networks. For example, the transmitter feeding network feeds the transmit UCA, and the receiver feeding network synthesizes signals of the receive UCA.

Optionally, the transmit UCA may generate a plurality of transmitted beams in continuous OAM states.

According to the method provided in this embodiment of this application, antenna quantities of the transmit and receive antenna arrays are equal, the full-duplex communication apparatus transmits transmitted beams in different OAM states by using the transmit UCA, and receives received beams in different OAM states by using the receive UCA, and the OAM states of the transmitted beams are not equal to opposite numbers of the OAM states of the received beams, so that self-interference cancellation is implemented by using orthogonality of the OAM states, to implement full-duplex communication. In addition, in this embodiment of this application, a plurality of transmitted beams in continuous OAM states may be further generated simultaneously, so that energy is converged to a specific direction, to implement beamforming.

In a possible implementation, the preset condition further includes: absolute values of the OAM states of the transmitted beams are less than a half of the quantity of transmit antennas; and absolute values of the OAM states of the received beams are less than a half of the quantity of receive antennas.

This implementation can further ensure that the transmit UCA can generate beams in OAM states, to implement self-interference cancellation.

In a possible implementation, an OAM state of each transmitted beam meets the following condition: $L_{TX} = \left[ l_1^{TX}, l_2^{TX}, \cdots, l_p^{TX}, \ldots, l_P^{TX} \right]^T$ , where p represents a p$^{th}$ transmitted beam, $l_p^{TX}$ represents an OAM state of the p$^{th}$ transmitted beam, P represents a quantity of transmitted beams, p is a positive integer less than or equal to P, and P is a positive integer.

In this implementation, an OAM state combination for transmission is selected based on a quantity of array elements of the transmit UCA, and an OAM state of each transmitted beam is determined based on the selected OAM state combination, to ensure self-interference cancellation and beamforming.

In a possible implementation, an OAM state of each received beam meets the following condition: $L_{RX} = \left[ l_1^{RX}, l_2^{RX}, \cdots, l_q^{RX}, \ldots, l_Q^{RX} \right]^T$ , where q represents a q$^{th}$ received beam, $l_q^{RX}$ represents an OAM state of the q$^{th}$ received beam, Q represents a quantity of received beams, q is a positive integer less than or equal to Q, and Q is a positive integer.

In this implementation, an OAM state combination for reception is selected based on a quantity of array elements of the receive UCA, and an OAM state of each received beam is determined based on the selected OAM state combination, to ensure self-interference cancellation.

In a possible implementation, before the transmitted beams in different OAM states are transmitted by using the transmit antenna array, a phase of each transmit antenna in the transmit antenna array may be further adjusted by using the feeding network. A phase of an n$^{th}$ transmit antenna in each transmit antenna is determined based on the OAM states $L_{TX}$ of the transmitted beams and the quantity N of transmit antennas of the transmit antenna array, n is a positive integer less than or equal to N, and N is a positive integer.

For example, the phase of the n$^{th}$ transmit antenna in the N transmit antennas meets the following condition:

$$\varphi_{p,n}^{TX} = l_p^{TX} \frac{2\pi(n-1)}{N}$$ , where $\varphi_{p,n}^{TX}$ represents a phase of the n$^{th}$ transmit antenna when a p$^{th}$ transmitted beam input port is excited.

In this implementation, a plurality of beam ports may be further excited simultaneously, to generate a plurality of transmitted beams in continuous OAM states in space, to implement transmit-end beamforming.

In this implementation, when a plurality of beam ports are excited simultaneously, the phase of the transmit antenna is equal to a superposition of phases when a single port is excited.

In a possible implementation, before the received beams in different OAM states are received by using the receive antenna array, a phase of each receive antenna in the receive antenna array may be further adjusted by using the feeding network. A phase of an m$^{th}$ receive antenna in each receive antenna is determined based on the OAM states $L_{RX}$ of the received beams and the quantity M of receive antennas of the receive antenna array, m is a positive integer less than or equal to M, and M is a positive integer.

For example, the phase of the m$^{th}$ receive antenna in the M receive antennas meets the following condition:

$$\varphi_{q,m}^{RX} = l_q^{RX} \frac{2\pi(m-1)}{M}$$ , where $\varphi_{q,m}^{RX}$ represents a phase of the m$^{th}$ receive antenna when a q$^{th}$ received beam output port is excited.

In this implementation, when a specific beam is received in space, a signal is output from a corresponding beam port, to implement receive-end beamforming. When a plurality of specific beams are received simultaneously, signals are output from a plurality of beam ports simultaneously.

In a possible implementation, all elements of a transmission matrix between a transmitted beam input port of the feeding network and a received beam output port of the feeding network are 0.

A transmission matrix between the P transmitted beam input ports and the Q received beam output ports meets the following formula: $H_{RX,TX} = \Phi_{TX} H_c \Phi_{RX}^T$, where $H_{RX,TX}$ is the transmission matrix between the P transmitted beam input ports and the Q received beam output ports, $\Phi_{TX}$ is a transmission matrix of the transmitter feeding network, $\Phi_{TX}$ is a transmission matrix of the receiver feeding network, and $H_c$ is a coupling matrix between the transmit UCA and the receive UCA.

The coupling matrix $H_c$ between the transmit UCA and the receive UCA meets the following formula:

$$H_c = \begin{bmatrix} \beta_{TX(1),RX(1)} & L & \beta_{TX(1),RX(M)} \\ M & O & M \\ \beta_{TX(N),RX(1)} & L & \beta_{TX(N),RX(M)} \end{bmatrix}$$, where $\beta_{TX(n),RX(m)}$ is a coupling coefficient from the $n^{th}$ transmit antenna to the $m^{th}$ receive antenna. When the quantity M of transmit antennas of the transmit UCA is equal to the quantity $N$ of receive antennas of the receive UCA, the coupling matrix $H_c$ between the transmit UCA and the receive UCA meets the following formula:

$$H_c = \begin{bmatrix} \beta_1 & \beta_2 & \beta_3 & L & \beta_N \\ \beta_N & \beta_1 & \beta_2 & L & \beta_{N-1} \\ \beta_{N-1} & \beta_N & \beta_1 & L & \beta_{N-2} \\ M & M & M & O & M \\ \beta_2 & \beta_3 & \beta_4 & L & \beta_1 \end{bmatrix}.$$

In a possible implementation, the method further includes: simultaneously generating a plurality of transmitted beams in continuous OAM states by using the transmit antenna array. A beam width of a beam formed by superposing the plurality of transmitted beams in space is inversely proportional to a quantity of excited transmitted beams.

In this implementation, a plurality of transmitted beams in continuous OAM states are excited simultaneously, and as a quantity of OAM beams in different modes increases, energy of a beam formed by superposition in space gradually concentrates circumferentially to a specific direction, thereby avoiding a problem of an energy hole in a main lobe direction of a single OAM beam.

In a possible implementation, the method further includes: adjusting an initial phase of the transmitted beams and/or the received beams by using a phase shifter. The feeding network is located between the phase shifter and the transmit antenna array, and the feeding network is located between the phase shifter and the receive antenna array.

The phase shifter and the feeding network may be connected directly or indirectly. If the phase shifter and the feeding network are connected indirectly, a power amplifier PA and/or a low noise amplifier LNA may be located between the phase shifter and the feeding network.

In a possible implementation, if P transmitted beams in OAM states are generated simultaneously, a far-field electric field of the P transmitted beams in the OAM states is determined based on the radius of the transmit UCA, the OAM states of the transmitted beams, and the initial phase of the OAM states of the transmitted beams and the received beams.

For example, a far-field electric field of the P transmitted beams at a point $(r, \theta, \varphi)$ in a spherical coordinate system meets the following formula:

$$E_{bf}\left(r,\theta,\varphi\right) = -j_e \frac{\mu_0 \omega d}{4\pi} N \frac{e^{-jkr}}{r} \sum_{p=1}^{P} j^{l_p^{TX}} e^{-jl_p^{TX}\left(\varphi+\varphi_0\right)} J_{l_p^{TX}}\left(ka\sin\theta\right),$$

where $E_{bf}(r,\theta,\varphi)$ is a far-field electric field of a beam formed by superposing the P transmitted beams in space, $\mu_0$ is a magnetic permeability of vacuum, $\omega$ is an angular frequency, $k$ is a wave number, $j_e$ is a current density of an electric dipole, $d$ is a length of the electric dipole, $a$ is the radius of the transmit UCA, $J_l$ is an $l$-order Bessel function, $l_p^{TX}$ is an element in $L_{TX}$, $\varphi_0$ is the initial phase of the OAM states of the transmitted beams and the received beams, $k$ meets k = $\omega/c$, and $c$ is a speed of light in vacuum.

In a possible implementation, the method further includes: adjusting a degree of $\theta_{ml}$ of a main lobe of the transmitted beam and/or a degree of $\varphi_{ml}$ of the main lobe of the transmitted beam by using the feeding network.

In this implementation, the degree of $\theta_{ml}$ represents a degree of $\theta$ of the main lobe (main lobe, ml) of the transmitted beam, and the degree of $\varphi_{ml}$ represents a degree of $\varphi$ of the main lobe of the transmitted beam.

The transmitter feeding network may adjust the degree of $\theta_{ml}$ of the main lobe of the transmitted beam by using OAM beams in different modes. The phase shifter may adjust the degree of $\varphi_{ml}$ of the main lobe of the transmitted beam by changing the initial phase $\varphi_0$ of the transmitted beam.

A value $\Delta\varphi_p^{TX}$ , corresponding to the p$^{th}$ transmitted beam, of the phase shifter depends on the initial phase $\varphi_0$ and the OAM mode $l_p^{TX}$ , and $\Delta\varphi_p^{TX} = l_p^{TX}\varphi_0$ .

In this implementation, beamforming and beam scanning in different directions may be implemented by adjusting a direction of the main lobe of the transmitted beam.

In a possible implementation, the method further includes: adjusting a quantity of main lobes of the transmitted beam by using the feeding network.

The transmitter feeding network may adjust the quantity of main lobes of the transmitted beam by adjusting a spacing between OAM states in $L_{TX}$. Generally, the spacing between the OAM states in $L_{TX}$ is equal to the quantity of main lobes of the transmitted beam.

In this implementation, beamforming of different shapes may be implemented by adjusting the quantity of main lobes of the transmitted beam.

According to a second aspect, an embodiment of this application provides a full-duplex communication apparatus, including a phase shifter, a feeding network, and an antenna array. The feeding network is located between the phase shifter and the antenna array, and the antenna array includes a transmit antenna array and a receive antenna array. The antenna array is a UCA, the UCA is configured to transmit transmitted beams in different OAM states and receive received beams in different OAM states, the full-duplex communication apparatus meets a preset condition, and the preset condition includes: a quantity of transmit antennas of the transmit antenna array is equal to a quantity of receive antennas of the receive antenna array, and the OAM states of the transmitted beams are not equal to opposite numbers of the OAM states of the received beams.

In a possible implementation, the preset condition further includes: absolute values of the OAM states of the transmitted beams are less than a half of the quantity of transmit antennas; and absolute values of the OAM states of the received beams are less than a half of the quantity of receive antennas.

In a possible implementation, the transmit UCA and the receive UCA are concentrically and coaxially placed.

In a possible implementation, a radius of the transmit UCA is the same as or different from a radius of the receive UCA.

In a possible implementation, if the radius of the transmit UCA is the same as the radius of the receive UCA, the transmit antenna array and the receive antenna array share an antenna array, or the transmit antenna array and the receive antenna array are independent antenna arrays.

In a possible implementation, the transmit antenna array and the receive antenna array share an antenna array, the apparatus further includes a circulator, and the circulator is located between the feeding network and the antenna array. In a possible implementation, the feeding network includes a transmitter feeding network and a receiver feeding network, and the transmitter feeding network and the receiver feeding network share a same feeding network, or the transmitter feeding network and the receiver feeding network use independent feeding networks.

In a possible implementation, the transmitter feeding network and the receiver feeding network share a same feeding network, the apparatus further includes a power splitter, and the power splitter is located between the feeding network and the antenna array.

In a possible implementation, the apparatus further includes one or more of the following: a baseband module, a digital cancellation module, a digital-to-analog converter DAC, an analog-to-digital converter ADC, a local oscillator LO, and a frequency mixer. The baseband module is connected to the digital cancellation module, the DAC and the ADC are located between the baseband module and the frequency mixer, and the LO is connected to the frequency mixer. In a possible implementation, the apparatus further includes a power amplifier PA and/or a low noise amplifier LNA. The PA and/or the LNA are/is located between the frequency mixer and the phase shifter; or the PA and/or the LNA are/is located between the phase shifter and the feeding network.

In a possible implementation, a rotation angle of an array element of the transmit antenna array relative to a first array element of the transmit antenna array is determined based on a quantity of array elements of the transmit antenna array and a number of the array element of the transmit antenna array; and/or a rotation angle of an array element of the receive antenna array relative to a first array element of the receive antenna array is determined based on a quantity of array elements of the receive antenna array and a number of the array element of the receive antenna array.

In a possible implementation, the transmitter feeding network is determined based on OAM states of to-be-transmitted beams and the quantity of array elements of the transmit antenna array; and/or the receiver feeding network is determined based on OAM states of to-be-received beams and the quantity of array elements of the receive antenna array.

For example, the transmitter feeding network meets the following condition:

$$\Phi_{TX} = L_{TX}\phi_{TX} = \begin{bmatrix} e^{-j\varphi_{1,1}^{TX}} & L & e^{-j\varphi_{1,N}^{TX}} \\ M & O & M \\ e^{-j\varphi_{P,1}^{TX}} & L & e^{-j\varphi_{P,N}^{TX}} \end{bmatrix}$$, where $\Phi_{TX}$ is a transmission matrix of the transmitter feeding network, $L_{TX}$ is OAM states of P transmitted beams corresponding to P transmitted beam input ports,

$$\phi_{TX} = \Delta\phi_{TX} + \frac{2\pi}{N} \cdot [0,1,\cdots N-1]$$ is circumferential position of an array element of the transmit UCA, $\Delta\phi_{TX}$ is any

value, N is the quantity of transmit antennas, and N is a positive integer.

The receiver feeding network meets the following condition:

$$\Phi_{RX} = L_{RX}\phi_{RX} = \begin{bmatrix} e^{-j\varphi_{1,1}^{RX}} & L & e^{-j\varphi_{1,M}^{RX}} \\ M & O & M \\ e^{-j\varphi_{Q,1}^{RX}} & L & e^{-j\varphi_{Q,M}^{RX}} \end{bmatrix}$$, where $\Phi_{RX}$ is a transmission matrix of the receiver feeding network,

$L_{RX}$ is OAM states of Q to-be-received beams corresponding to Q received beam output ports,

$$\phi_{RX} = \Delta\phi_{RX} + \frac{2\pi}{M} \cdot [0,1,\cdots M-1]$$ is circumferential position of an array element of the receive UCA, $\Delta\phi_{RX}$ is

any value, M is the quantity of receive antennas, and M is a positive integer.

In a possible implementation, an OAM state of each transmitted beam meets the following condition:

$$L_{TX} = [l_1^{TX}, l_2^{TX}, \cdots, l_p^{TX}, \ldots, l_P^{TX}]^T$$, where p represents a p-th transmitted beam, $l_p^{TX}$ represents an OAM state of the p-th transmitted beam, P represents a quantity of transmitted beams, p is a positive integer less than or equal to P, and P is a positive integer; and/or a phase of an n-th transmit antenna in each transmit antenna is determined based on the OAM states $L_{TX}$ of the transmitted beams and the quantity N of transmit antennas of the transmit antenna array, n is a positive integer less than or equal to N, and N is a positive integer.

In a possible implementation, an OAM state of each received beam meets the following condition:

$$L_{RX} = [l_1^{RX}, l_2^{RX}, \cdots, l_q^{RX}, \ldots, l_Q^{RX}]^T$$, where q represents a q-th received beam, $l_q^{RX}$ represents an OAM state of the q-th received beam, Q represents a quantity of received beams, q is a positive integer less than or equal to Q, and Q is a positive integer; and/or a phase of an m-th receive antenna in each receive antenna is determined based on the OAM states $L_{RX}$ of the received beams and the quantity M of receive antennas of the receive antenna array, m is a positive integer less than or equal to M, and M is a positive integer.

In a possible implementation, all elements of a transmission matrix between a transmitted beam input port of the feeding network and a received beam output port of the feeding network are 0.

In a possible implementation, the transmit UCA is specifically configured to simultaneously generate a plurality of transmitted beams in continuous OAM states. A beam width of a beam formed by superposing the plurality of transmitted beams in space is inversely proportional to a quantity of excited transmitted beams.

In a possible implementation, the phase shifter is configured to adjust an initial phase of the transmitted beams and/or the received beams.

In a possible implementation, if P transmitted beams in OAM states are generated simultaneously, a far-field electric field of the P transmitted beams in the OAM states is determined based on the radius of the transmit UCA, the OAM states of the transmitted beams, and the initial phase of the OAM states of the transmitted beams.

In a possible implementation, the transmitter feeding network is specifically configured to: adjust a degree of $\theta_{ml}$ of a main lobe of the transmitted beam and/or a degree of $\varphi_{ml}$ of the main lobe of the transmitted beam.

In a possible implementation, the transmitter feeding network is specifically configured to: adjust a quantity of main lobes of the transmitted beam.

According to a third aspect, an embodiment of this application provides a full-duplex communication apparatus. The full-duplex communication apparatus may implement the method in any one of the first aspect or the possible implementations of the first aspect. The function may be implemented by hardware, or may be implemented by hardware by executing corresponding software. The hardware or the software includes one or more function modules corresponding to the foregoing function.

According to a fourth aspect, a full-duplex communication apparatus is provided. The full-duplex communication apparatus includes a transceiver and a processor, and optionally, further includes a memory. The memory is configured to store a computer program or instructions, and the processor is coupled to the memory and the transceiver. When the processor executes the computer program or instructions, the full-duplex communication apparatus is enabled to perform the method in any one of the first aspect or the possible implementations of the first aspect.

According to a fifth aspect, a computer program product is provided. The computer program product includes computer program code, and when the computer program code runs on a computer, the computer is enabled to perform the method in any one of the first aspect or the possible implementations of the first aspect.

According to a sixth aspect, this application provides a chip system. The chip system includes a processor and a memory, the processor and the memory are electrically coupled, the memory is configured to store computer program instructions, the processor is configured to execute some or all of the computer program instructions in the memory, and the some or all of the computer program instructions are executed to implement functions in the method in any one of the first aspect or the possible implementations of the first aspect.

In a possible design, the chip system further includes a transceiver, and the transceiver is configured to send a signal processed by the processor, or receive a signal and input the signal to the processor. The chip system may include a chip, or may include a chip and another discrete component.

According to a seventh aspect, a computer-readable storage medium is provided. The computer-readable storage medium stores a computer program. When the computer program runs, the method in any one of the first aspect or the possible implementations of the first aspect is implemented.

## BRIEF DESCRIPTION OF DRAWINGS

FIG. 1 is a schematic diagram of an architecture of a communication system according to an embodiment of this application;
FIG. 2 is a schematic diagram of a structure of an antenna with a symmetric cross structure;
FIG. 3 is a schematic diagram of far-field energy distribution of a symmetric cross structure;
FIG. 4 is a schematic diagram of a structure of an antenna with a three-dimensional structure;
FIG. 5 is a schematic diagram of far-field energy distribution of a three-dimensional structure;
FIG. 6 is a schematic flowchart of a full-duplex communication method according to an embodiment of this application;
FIG. 7 is a schematic diagram of far-field energy distribution according to an embodiment of this application;
FIG. 8 is a schematic diagram of a structure of a full-duplex communication apparatus according to an embodiment of this application;
FIG. 9 is a schematic diagram of a feeding network according to an embodiment of this application;
FIG. 10 is a schematic diagram of transmit and receive UCAs according to an embodiment of this application;
FIG. 11 is a schematic diagram of a structure of a full-duplex communication apparatus according to an embodiment of this application;
FIG. 12 is a schematic diagram of a structure of a full-duplex communication apparatus according to an embodiment of this application;
FIG. 13 is a schematic diagram of a structure of a full-duplex communication apparatus according to an embodiment of this application;
FIG. 14 is a schematic diagram of a structure of a full-duplex communication apparatus according to an embodiment of this application;
FIG. 15 is a schematic diagram of a structure of a full-duplex communication apparatus according to an embodiment of this application;
FIG. 16 is a schematic diagram of a structure of a full-duplex communication apparatus according to an embodiment of this application;
FIG. 17 is a schematic diagram of a structure of a full-duplex communication apparatus according to an embodiment of this application;
FIG. 18 is a schematic diagram of a structure of a full-duplex communication apparatus according to an embodiment of this application; and
FIG. 19 is a schematic diagram of a structure of a full-duplex communication apparatus according to an embodiment of this application.

## DESCRIPTION OF EMBODIMENTS

The following further describes in detail embodiments of this application with reference to accompanying drawings. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompany drawings. In addition, a combination of these solutions may be used.

In addition, the word "example" in embodiments of this application is used to represent giving an example, an illustration, or a description. Any embodiment or design described as an "example" in this application should not be explained as being more preferred or having more advantages than another embodiment or design. Exactly, the term "example" is used to present a concept in a specific manner.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in the embodiments of this application are also applicable to a similar technical problem.

The following describes some terms in embodiments of this application, to facilitate understanding of a person skilled in the art.

(1) Full-duplex (full-duplex) communication: It is also referred to as two-way simultaneous communication. A device using the full-duplex communication manner may simultaneously send and receive information, that is, may send data while receiving data.

(2) Phase shifter: It is configured to adjust a phase of an electromagnetic wave (or a beam). In the embodiments of this application, an initial value of a phase is also referred to as an initial phase.

(3) Feeding network: It includes a transmitter feeding network and a receiver feeding network. The feeding network is configured to generate radio frequency signals of specific phases and amplitudes to feed a transmit antenna array.

(4) Antenna array: Two or more single antennas working at a same frequency are fed and spatially arranged based on a specific requirement to form an antenna array. Antenna radiating elements that constitute the antenna array are referred to as array elements. The antenna array includes a transmit antenna array and a receive antenna array. A structure of the antenna array includes a uniform circular array (Uniform Circular Array, UCA), a uniform linear array (Uniform Linear Array, ULA), and the like. In the embodiments of this application, the structure of the antenna array is mainly the UCA. A transmit antenna array whose structure is the UCA is also referred to as a transmit UCA, and a receive antenna array whose structure is the UCA is also referred to as a receive UCA.

(5) Beam: It indicates a shape formed in space by an electromagnetic wave emitted by an antenna, just like a beam of a flashlight that has a specific range. Alternatively, a signal emitted by the antenna does not radiate 360°, but is a signal wave concentrated and transmitted in a specific direction. Generally, the beam includes a transmitted beam and a received beam. A direction with the strongest beam energy is referred to as a main lobe direction of the beam. Generally, if a beam has a plurality of directions with equal and maximum energy, the beam has a plurality of main lobes.

(6) OAM state: It is also referred to as an OAM mode, which is one of inherent attributes of an electromagnetic wave. The OAM state may be any integer, for example, -1, 1, 2, or 3. Alternatively, the OAM state may be a one-dimensional array including integers, and a quantity of OAM states included in the one-dimensional array is not limited, for example, [-2, -1, 1, 2] or another limited quantity. Alternatively, there may be no upper limit on the quantity of OAM states. It may be understood that, in an actual application, one combination may include an OAM state of a transmitted beam and an OAM state of a received beam, or one combination may include an OAM state of a transmitted beam, and another combination may include an OAM state of a received beam. Generally, the OAM state is an integer.

OAM states of beams may be the same or different. In the embodiments of this application, an example in which the OAM states of the beams are different is mainly used for description. Beams in different OAM states are also referred to as OAM beams in different modes.

The term "and/or" in this application describes an association relationship for describing associated objects and indicates that three relationships may exist. For example, A and/or B may indicate the following three cases: Only A exists, both A and B exist, and only B exists. The character "/" usually indicates an "or" relationship between the associated objects.

"A plurality of" in this application means two or more.

In addition, it should be understood that in the description of this application, terms such as "first" and "second" are merely used for distinguishing and description, but should not be understood as indicating or implying relative importance, or should not be understood as indicating or implying a sequence.

A full-duplex communication method and apparatus provided in the embodiments of this application can be applied to various communication systems. For example, the mobile communication systems may be a fourth generation (4th Generation, 4G) communication system (for example, a long term evolution (long term evolution, LTE) system), a worldwide interoperability for microwave access (worldwide interoperability for microwave access, WiMAX) communication system, a fifth generation (5th Generation, 5G) communication system (for example, a new radio (new radio, NR) systems), and a future mobile communication systems, such as a 6G system. In addition, the full-duplex communication method and apparatus provided in the embodiments of this application may be applied to a satellite communication system. The satellite communication system may be integrated with the foregoing communication system.

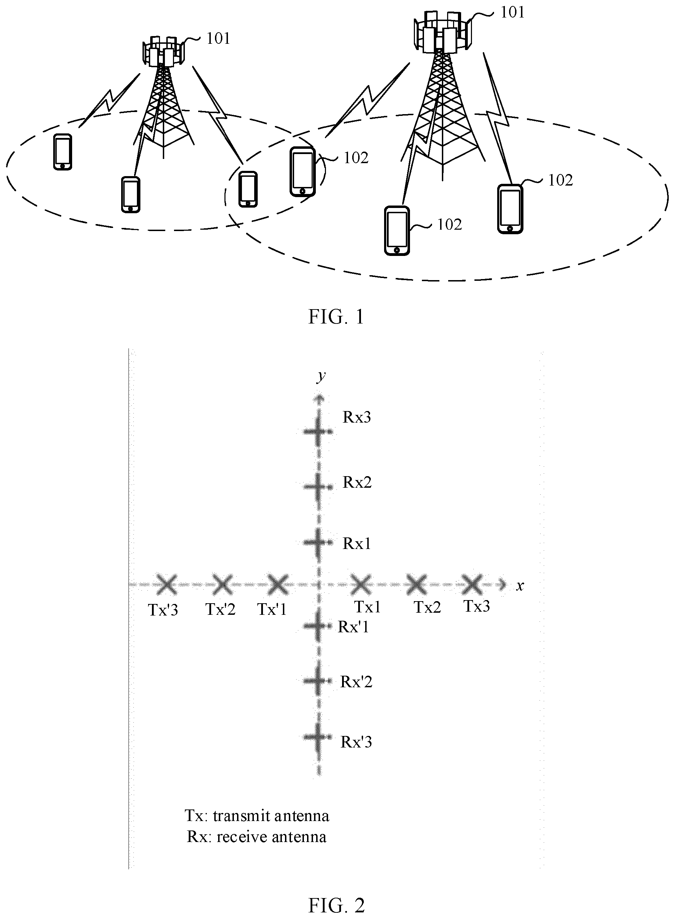

For ease of understanding the embodiments of this application, an application scenario used in this application is described by using a communication system architecture shown in FIG. 1 as an example. Referring to FIG. 1, a communication system 100 includes a network device 101 and a terminal device 102. The full-duplex communication apparatus provided in the embodiments of this application may be applied to the network device 101 or the terminal device 102. Alternatively, it may be considered that the full-duplex communication apparatus may be the network device 101 or the terminal device 102. In the embodiments of this application, an example in which the full-duplex communication apparatus is applied to the network device 101 is mainly used for description. It may be understood that FIG. 1 shows only a possible communication system architecture to which the embodiments of this application may be applied. In another possible scenario, the communication system architecture may further include another device.

The network device 101 is any device having a wireless transceiver function or a chip that can be disposed on the device. The device includes, but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like, or may be a gNB or a transmission point (TRP or TP) in a 5G system, such as an NR system, or an antenna panel or an antenna panel group (including a plurality of antenna panels) of a base station in the 5G system, or may be a network node constituting a gNB or a transmission point, such as a baseband unit (BBU) or a distributed unit (distributed unit, DU), or may be a satellite in a satellite communication system.

In some deployments, the gNB may include a centralized unit (centralized unit, CU) and a DU. The gNB may further include a radio unit (radio unit, RU). The CU implements a part of functions of the gNB, and the DU implements a part of functions of the gNB. For example, the CU implements functions of a radio resource control (radio resource control, RRC) layer and a packet data convergence protocol (packet data convergence protocol, PDCP) layer, while the DU implements functions of a radio link control (radio link control, RLC) layer, a media access control (media access control, MAC) layer, and a physical (physical, PHY) layer. Information at the RRC layer finally becomes information at the PHY layer or is transformed from information at the PHY layer. Therefore, in such an architecture, it may be considered that higher layer signaling such as RRC layer signaling or PHCP layer signaling is sent by the DU or is sent by the DU and the RU. It can be understood that the network device may be a CU node, a DU node, or a device including a CU node and a DU node. In addition, the CU may be classified as a network device in a radio access network RAN, or the CU may be classified as a network device in a core network CN. This is not limited herein. The terminal device may also be referred to as user equipment (UE, User Equipment), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. A terminal device having a wireless transceiver function and a chip that may be disposed in the terminal device are collectively referred to as terminal devices in this application.

The full-duplex communication apparatus and method provided in the embodiments of this application may be applied to a multi-antenna full-duplex communication scenario. The multi-antenna application scenario may include, for example, a multiple-input multiple-output (multi-input multi-output, MIMO) technology or a massive multiple-input multiple-output massive-MIMO technology.

Communication systems (such as a 4G system and a 5G system) mostly use a time division duplex (Time Division Duplexing, TDD) system and a frequency division duplex (Frequency Division Duplexing, FDD) system. In the TDD system, an uplink signal and a downlink signal are transmitted in different timeslots. In the FDD system, an uplink signal and a downlink signal are transmitted in different frequency bands. TDD and FDD are half-duplex systems. If signals are simultaneously transmitted and received at a same frequency, a signal sent by a transmit end may leak to a receive end, which may interfere with normal signal reception of the communication system. Therefore, in the half-duplex systems, it is impossible to simultaneously transmit an uplink signal and a downlink signal at a same frequency. As fewer spectrum resources are available while applications require a higher rate of wireless transmission, a full-duplex technology gradually becomes a potential technical means to double spectral efficiency. A core of the full-duplex technology is self-interference signal cancellation. The self-interference signal cancellation may be implemented in a manner such as passive cancellation in a propagation domain, active cancellation in an analog domain, and active cancellation in a digital domain. A relatively convenient method for implementing the self-interference signal cancellation is designing a placement manner of an antenna array for passive superposition elimination in a propagation domain, to implement high isolation between transmit and receive ports of a device. OAM is an inherent attribute of an electromagnetic wave, and corresponds to a spiral phase wavefront of a beam in space. Electromagnetic waves carrying different OAM states are orthogonal to each other when propagated coaxially in space. Therefore, a conventional orbital angular momentum electromagnetic wave theory holds that modulating different information to electromagnetic waves in different OAM states for multiplexing can increase a channel capacity of a wireless communication system. However, an energy hole exists in a beam center of each OAM electromagnetic wave in a non-zero state, and an area of the hole increases with an increase of a propagation distance. This means that an antenna or antenna array with a large diameter is required at a receive end to perfectly demodulate an OAM beam. In addition, multiplexing and demultiplexing of OAM electromagnetic waves have strict conditions for antenna alignment at a transmit end and a receive end, and a slight eccentric or off-axis state causes sharp performance degradation. Obviously, it is difficult for both the network device (such as a base station) and the terminal device to use an antenna array with a large diameter, and it is difficult for a link between the network device and the terminal device to maintain coaxial transmission due to mobility of the terminal. Therefore, a method for implementing multiplexing between the network device and the terminal device by using orthogonality of OAM beams is difficult to be used in an actual communication system. On the other hand, for the network device or the terminal device, a transmit array and a receive array may generally share an array, or it is not difficult to implement a transmit array and a receive array that are concentric and coaxial. Therefore, if OAM states of transmitted beams and received beams meet a specific condition, self-interference cancellation may be implemented by using orthogonality between the OAM modes, to implement full-duplex communication. Therefore, how to properly design an antenna array and a feeding network of the antenna array to implement self-interference cancellation in a propagation domain by using orthogonality of OAM beams and avoid a problem brought by the OAM beams, such as an energy hole in a beam center, is a problem that needs to be resolved in full-duplex communication.

FIG. 2 shows an antenna array with a symmetric cross structure. The antenna array is used in a communication system to implement self-interference cancellation. An x-axis direction is a transmit antenna array, a y-axis direction is a receive antenna array, and the following conditions are met: Both the transmit antenna array and the receive antenna array are ULAs and are placed in a symmetric cross structure. A phase difference between two axially symmetric antennas is $\pi$. The two axially symmetric antennas are Tx1 and Tx'1, Tx2 and Tx'2, Rx1 and Rx'1, or the like in FIG. 2.

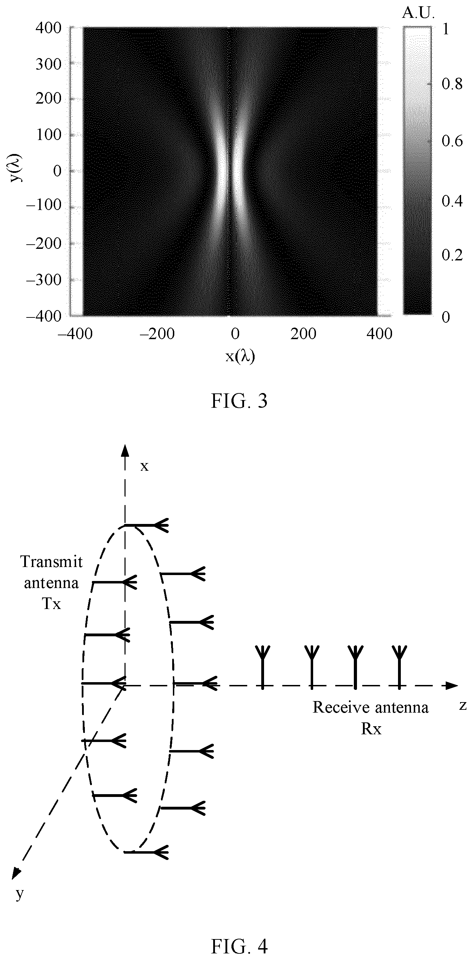

However, compared with a common antenna array, the foregoing method doubles a quantity of antennas, and wastes a diversity gain of antennas. There are many energy holes in far-field main lobe directions. As shown in black regions of FIG. 3, there is no energy distribution on a vertical bisector of transmit antennas or hyperbolas with a pair of symmetrical transmit antennas as focuses, leading to energy holes. The ULA can implement beamforming in only one direction. Therefore, when applied to a communication system, the ULA cannot meet an actual communication requirement well.

FIG. 4 shows an antenna array with a three-dimensional structure. The antenna array is used in a communication system to implement self-interference cancellation. A plane formed by an x-axis and a y-axis is a plane on which a transmit antenna array is located, a receive antenna array is in a z-axis direction, and the following conditions are met: The transmit antenna array is a UCA. The receive antenna array is a ULA. The receive antenna ULA is placed on a central axis of the transmit UCA. A phase of each array element in the transmit UCA meets a specific condition to implement zero energy in a beam center.

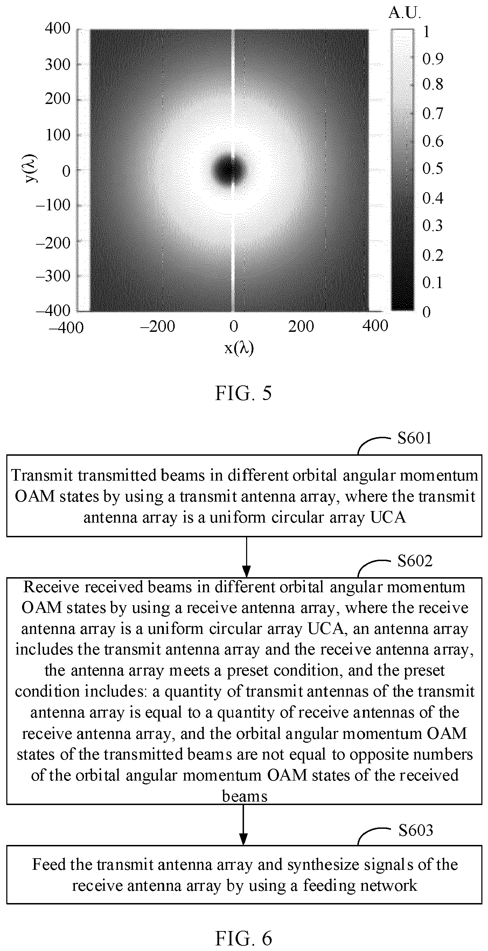

However, the antenna array with the three-dimensional structure shown in the foregoing method wastes space. Different structures of the transmit antenna array and the receive antenna array cause different main lobe directions of a transmitted beam and a received beam, thereby affecting performance of the communication system. The transmit antenna array cannot perform beam scanning, which is not conducive to signal reception. Far-field energy distribution of the antenna array with the three-dimensional structure is shown in FIG. 5. There is an energy hole in a beam center, and self-interference cancellation may be implemented by using the energy hole in the beam center. However, such a beam shape is not conducive to reception on a terminal device side. For example, a terminal device located in a beam center region (that is, a region in which the energy hole exists) cannot receive energy.

During self-interference signal elimination, the several antenna arrays shown above have problems such as an energy hole in a beam center, a beamforming failure, an energy waste, and a complex structure. Therefore, in full-duplex communication, how to implement advantages of an existing communication system such as supporting multi-antenna, supporting three-dimensional beamforming, no energy hole in a beam center, and a simple structure during self-interference elimination is a problem that needs to be resolved.

In view of this, to implement advantages of an existing communication system such as supporting multi-antenna, supporting three-dimensional beamforming, no energy hole in a beam center, and a simple structure and implement self-interference elimination in full-duplex communication, this application proposes a full-duplex communication method to eliminate a self-interference signal in full-duplex communication.

In the method, transmitted beams in different OAM states are transmitted by using a transmit UCA, received beams in different OAM states are received by using a receive UCA, and the transmit UCA is fed and signals received by the receive UCA are synthesized by using a feeding network. A quantity of transmit antennas of the transmit antenna array is equal to a quantity of receive antennas of the receive antenna array, and the OAM states of the transmitted beams are not equal to opposite numbers of the OAM states of the received beams, so that self-interference cancellation is implemented by using a characteristic of the OAM states.

The full-duplex communication method provided in the embodiments of this application may be applied to the communication system shown in FIG. 1. The following describes in detail a specific process of the full-duplex communication method with reference to FIG. 6. As shown in FIG. 6, the process includes the following.

S601. Transmit transmitted beams in different OAM states by using a transmit antenna array.

The transmit antenna array is a UCA, and the transmit antenna array whose structure is a UCA is also referred to as a transmit UCA. Specifically, the full-duplex communication apparatus transmits the transmitted beams in different OAM states by using the transmit UCA. The full-duplex communication apparatus may further generate the transmitted beams in different OAM states by using the transmit UCA. The transmit UCA is circular, and spacings between antenna array elements in the transmit UCA are equal. The transmit antenna array may be understood as being located in a transmitter radio frequency link.

If the full-duplex communication apparatus is a network device, in S601, a plurality of OAM beams in different modes can be simultaneously transmitted in free space. A terminal device does not need to entirely receive the OAM beams or consider the OAM beams. The terminal device may process a received signal in a manner of processing a common beam.

In S601, in a possible implementation, the full-duplex communication apparatus sends a control instruction or a control signal to a feeding network, to control the feeding network to feed the transmit antenna array, to excite the transmit antenna array to generate and transmit the transmitted beams in different OAM states.

The feeding network may include a transmitter feeding network and a receiver feeding network. The transmitter feeding network is located in the transmitter radio frequency link, and the receiver feeding network is located in a receiver radio frequency link. The transmitter feeding network and the receiver feeding network may share a feeding network, or the transmitter feeding network and the receiver feeding network may use independent feeding networks. In this implementation, the transmit antenna array and the feeding network may be located in the transmitter radio frequency link, and the full-duplex communication apparatus sends a control instruction or a control signal to the transmitter radio frequency link in which the transmit antenna array is located, to control the feeding network in the transmitter radio frequency link to feed the transmit antenna array, to excite the transmit antenna array to generate and transmit the transmitted beams in different OAM states.

In another possible implementation, the full-duplex communication apparatus sends radio frequency signals having specific phases to array elements of the transmit antenna array, to control the transmit antenna array to generate and transmit the transmitted beams in different OAM states.

In still another possible implementation, the full-duplex communication apparatus includes the transmit antenna array and the feeding network, and the feeding network in the full-duplex communication apparatus feeds the transmit antenna array based on a transmitted radio frequency signal, to excite the transmit antenna array to generate and transmit the transmitted beams in different OAM states. Both the transmit antenna array and the feeding network may be located in the transmitter radio frequency link.

In this implementation, the feeding network in the full-duplex communication apparatus includes a transmitter feeding network and a receiver feeding network, and the transmitter feeding network is connected to the transmit antenna array. For details of this implementation, refer to the following embodiment of the full-duplex communication apparatus.

The transmit antenna array may be configured to generate and transmit one or more transmitted beams. Generally, the transmit antenna array generates and transmits a plurality of transmitted beams. OAM states of all the transmitted beams are different. The transmitted beams in different OAM states may also be referred to as transmitted OAM beams in different modes. In addition, an absolute value of an OAM state of the (any) transmitted beam is less than a half of a quantity of transmit antennas, which can further ensure that the transmit UCA can generate beams in OAM states, to implement self-interference cancellation.

When generating beams in OAM states, the transmit UCA may first select the OAM states from a set of OAM states, and then generate transmitted beams in the OAM states.

For example, an OAM state of each transmitted beam meets the following condition:

$L_{TX} = \left[ l_1^{TX}, l_2^{TX}, \cdots, l_p^{TX}, \ldots, l_P^{TX} \right]^T$ , where p represents a $p^{th}$ transmitted beam, $l_p^{TX}$ represents an OAM state of the $p^{th}$ transmitted beam, P represents a quantity of transmitted beams, p is a positive integer less than or equal to P, and P is a positive integer. That is, the OAM state of the transmitted beam is generally selected from the set $L_{TX}$. Alternatively, P may be understood as P transmitter radio frequency links, that is, there are P transmitter radio frequency links in which the transmit antenna array is located. Alternatively, P may be understood as P transmitted beam input ports, the P transmitted beam input ports are located on the feeding network, the feeding network may excite, through the P transmitted beam input ports, the transmit UCA to generate and transmit P transmitted beams.

Optionally, the transmit UCA may include one annular array, that is, the transmit UCA is located on one annular array. Alternatively, the transmit UCA may include a plurality of concentric and coaxial annular arrays, that is, the transmit UCA may be located on different annular arrays.

In addition, the foregoing conventional technology has problems such as an energy hole in a beam center and a beamforming failure, resulting in that the conventional technology cannot be better applied to a communication system. However, the full-duplex communication method proposed in this application can implement self-interference cancellation, resolve the energy hole problem, and support three-dimensional beamforming and beam scanning.

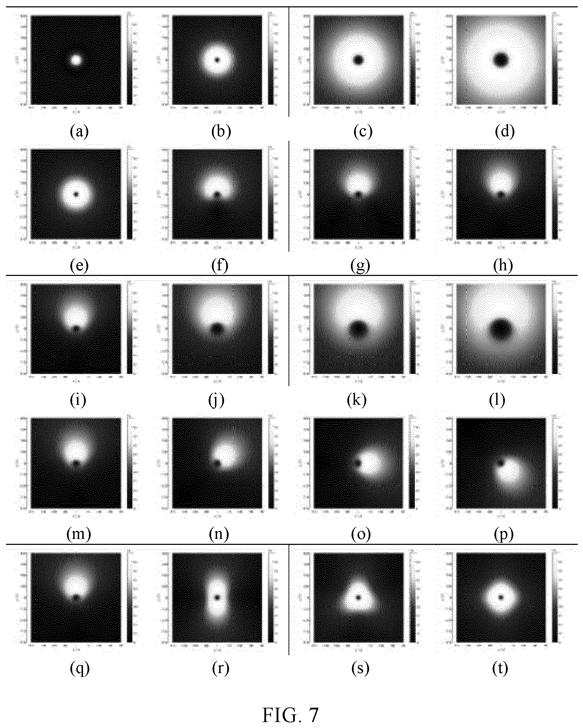

As described in the foregoing conventional technology, as shown in (a) of FIG. 7, an OAM state of a transmitted beam **is 0, and** a field strength of a center of a zero-state single-mode OAM beam is non-zero. Due to a property of a Bessel function, as shown in (b), (c), and (d) of FIG. 7, a field strength of a center of any non-zero single-mode OAM beam is 0. An OAM state of a transmitted beam in (b) of FIG. 7 is 1, an OAM state of a transmitted beam in (c) of FIG. 7 is 2, and an OAM state of a transmitted beam in (d) of FIG. 7 is 3. Because the OAM beam is divergent, an area of an energy hole in a beam center increases with an increase of a propagation distance. If a terminal device is located in a central region of coverage of the beam, the terminal device cannot receive any energy. In this embodiment of this application, OAM beamforming may be implemented by simultaneously exciting a plurality of modes to resolve the problem.

Specifically, in S601, the full-duplex communication apparatus may generate a plurality of transmitted beams in continuous OAM states by using the transmit antenna array. A beam width formed by superposing the plurality of transmitted beams in space is inversely proportional to a quantity of excited transmitted beams. In this way, a plurality of transmitted beams in continuous OAM states are excited simultaneously, and as a quantity of OAM beams in different modes increases, energy of a beam formed by superposition in space gradually concentrates circumferentially to a specific direction, that is, energy distribution of the transmitted beams changes from uniform distribution of each phase in single-mode excitation to converging to a specific direction, thereby avoiding an energy hole in a beam center. As shown in (e), (f), (g), and (h) of FIG. 7, an OAM state of a transmitted beam in (e) of FIG. 7 is 1, OAM states of transmitted beams in (f) of FIG. 7 are 1 and 2, OAM states of transmitted beams in (g) of FIG. 7 are 1, 2, and 3, and OAM states of transmitted beams in (h) of FIG. 7 are 1, 2, 3, and 4.

If P transmitted beams in OAM states are generated simultaneously, a far-field electric field of the P transmitted beams in the OAM states at a point $(r,\theta,\varphi)$ in a spherical coordinate system is determined based on a radius of the transmit UCA, the OAM states of the transmitted beams, and the initial phase of OAM states of the transmitted beams and received beams. For example, the far-field electric field of the P transmitted beams in the OAM states meets the following condition:

$$E_{bf}\left(r,\theta,\varphi\right) = -j_e \frac{\mu_0 \omega d}{4\pi} N \frac{e^{-jkr}}{r} \sum_{p=1}^{P} j^{l_p^{TX}} e^{-jl_p^{TX}(\varphi+\varphi_0)} J_{l_p^{TX}}\left(ka\sin\theta\right)$$ , where $E_{bf}(r,\theta,\varphi)$ is a far-field electric field of a beam formed by superposing the P transmitted beams in space, $\mu_0$ is a magnetic permeability of vacuum, $\omega$ is an angular frequency, k is a wave number, $j_e$ is a current density of an electric dipole, d is a length of the electric dipole, a is the radius of the transmit UCA, $J_l$ is an l-order Bessel function, $l_p^{TX}$ is an element in $L_{TX}$, $\varphi_0$ is the initial phase of the OAM states of the transmitted beams and the received beams, k meets $k = \omega/c$, and c is a speed of light in vacuum.

The P transmitted beams in the OAM states may be a superposition of far-field electric fields of a plurality of single-mode OAM beams. A far-field electric field of an excited single-mode OAM beam meets the following condition:

$$E\left(r,\theta,\varphi\right) = -j_e \frac{\mu_0 \omega d}{4\pi} N j^l \frac{e^{-jkr}}{r} e^{-jl^{TX}\varphi} J_l\left(ka\sin\theta\right)$$ .

Before S601, the full-duplex communication apparatus may further adjust a phase of each transmit antenna in the transmit antenna array. A phase of an $n^{th}$ transmit antenna in each transmit antenna is determined based on the OAM states $L_{TX}$ of the transmitted beams and the quantity N of transmit antennas of the transmit antenna array, n is a positive integer less than or equal to N, and N is a positive integer. For example, the phase of the $n^{th}$ transmit antenna in the N transmit antennas meets the following condition: $\varphi_{p,n}^{TX} = l_p^{TX} \frac{2\pi(n-1)}{N}$ , where $\varphi_{p,n}^{TX}$ represents a phase of the $n^{th}$

transmit antenna when a pth transmitted beam input port is excited.

Optionally, in a beamforming process, the full-duplex communication apparatus may further adjust an initial phase of the transmitted beams by using a phase shifter, that is, adjust a degree of $\varphi_{ml}$ of a main lobe of the transmitted beam. The feeding network is located between the phase shifter and the transmit antenna array. The phase shifter and the feeding network may be connected directly or indirectly. If the phase shifter and the feeding network are connected indirectly, an amplifier may be located between the phase shifter and the feeding network. The amplifier includes a power amplifier (Power Amplifier, PA) and/or a low noise amplifier (Low Noise Amplifier, LNA). For example, in the transmitter radio frequency link, the PA is located between the phase shifter and the feeding network, and in the receiver radio frequency link, the LNA is located between the phase shifter and the feeding network. In (m) of FIG. 7, the OAM states of the transmitted beams include 1, 2, 3. and 4, and the initial phase is 0. In (n) of FIG. 7, the OAM states of the transmitted beams include 1, 2, 3, and 4, and the initial phase is $\frac{\pi}{4}$. In (o) of FIG. 7, the OAM states of the transmitted beams include 1, 2, 3, and 4, and the initial phase is $\frac{\pi}{2}$. In (p) of FIG. 7, the OAM states of the transmitted beams include 1, 2, 3, and 4, and the initial phase is $\frac{3\pi}{4}$.

Optionally, in the beamforming process, the full-duplex communication apparatus may further adjust a degree of $\theta_{ml}$ of the main lobe of the transmitted beam by using the feeding network. For example, beam scanning in a $\theta$ direction may be implemented by using OAM beams in different modes. A higher order of the OAM mode indicates a larger angle $\theta_{ml}$ of a main lobe of the beam. As shown in (i), (j), (k), and (1) of FIG. 7, OAM states of excited transmitted beams in (i) of FIG. 7 include 1, 2, 3, and 4, OAM states of excited transmitted beams in (j) of FIG. 7 include 2, 3, 4, and 5, OAM states of excited transmitted beams in (k) of FIG. 7 include 3, 4, 5, and 6, and OAM states of excited transmitted beams in (1) of FIG. 7 include 4, 5, 6, and 7.

Optionally, in the beamforming process, the full-duplex communication apparatus may further adjust a quantity of main lobes of the transmitted beam by using the feeding network. For example, the quantity of main lobes of the transmitted beam may be adjusted by changing a spacing between OAM states. The quantity of main lobes of the beam is the spacing between the OAM states. As shown in (q), (r), (s), and (t) of FIG. 7, OAM states of excited transmitted beams in (q) of FIG. 7 include 1, 2, 3, and 4, and a spacing between the OAM states is 1, OAM states of excited transmitted beams in (r) of FIG. 7 include 1, 3, 5, and 7, and a spacing between the OAM states is 2, OAM states of excited transmitted beams in (s) of FIG. 7 include 1, 4, 7, and 10, and a spacing between the OAM states is 3, and OAM states of excited transmitted beams in (t) of FIG. 7 include 1, 5, 9, and 13, and a spacing between the OAM states is 4.

S602. Receive received beams in different OAM states by using a receive antenna array.

The array includes the transmit antenna array and the receive antenna array, the antenna array meets a preset condition, and the preset condition includes: the quantity of transmit antennas of the transmit antenna array is equal to a quantity of receive antennas of the receive antenna array, and the OAM states of the transmitted beams are not equal to opposite numbers of the OAM states of the received beams.

The receive antenna array is a UCA, and the receive antenna array whose structure is a UCA is also referred to as a receive UCA. Specifically, the full-duplex communication apparatus receives the received beams in different OAM states by using the receive UCA. The receive UCA is circular, and spacings between antenna array elements in the receive UCA are equal. The receive antenna array may be understood as being located in the receiver radio frequency link. The radius of the transmit UCA may be the same as or different from a radius of the receive UCA. Optionally, if the radius of the transmit UCA is the same as the radius of the receive UCA, the transmit UCA and the receive UCA may share an antenna array, or the transmit UCA and the receive antenna array UCA may use independent antenna arrays.

Similar to the transmit antenna array, in S602, in a possible implementation, the full-duplex communication apparatus synthesizes radio frequency signals received by the receive antenna array into radio frequency signals representing beams in different OAM states, to control the receive antenna array to receive the received beams in different OAM states.

In another possible implementation, the full-duplex communication apparatus sends a control instruction or a control signal to the feeding network, to control the feeding network to synthesize radio frequency signals received by array elements of the receive antenna array into radio frequency signals representing beams in different OAM states, to control the receive antenna array to receive the received beams in specific OAM states in space.

In this implementation, the receive antenna array and the feeding network may be located in the receiver radio frequency link, and the full-duplex communication apparatus sends a control instruction or a control signal to the receiver radio frequency link in which the receive antenna array is located, to control the feeding network in the receiver radio frequency link to synthesize the radio frequency signals received by the array elements of the receive antenna array into the radio frequency signals representing the beams in different OAM states, to control the receive antenna array to receive the received beams in specific OAM states in space.

In still another possible implementation, the full-duplex communication apparatus includes the receive antenna array and the feeding network, and the feeding network in the full-duplex communication apparatus synthesizes, based on beams in OAM states that need to be received, radio frequency signals received by array elements of the receive antenna array, to control the receive antenna array to receive only the received beams in specific OAM states in space. Both the receive antenna array and the feeding network may be located in the receiver radio frequency link.

In this implementation, the feeding network in the full-duplex communication apparatus includes a transmitter feeding network and a receiver feeding network, and the receiver feeding network is connected to the receive antenna array. For details of this implementation, refer to the following embodiment of the full-duplex communication apparatus. The receive antenna array may be configured to receive one or more received beams. Generally, the receive antenna array receives a plurality of received beams. OAM states of all the received beams are different. The received beams in different OAM states may also be referred to as received OAM beams in different modes. In addition, an absolute value of an OAM state of the (any) received beam is less than a half of a quantity of receive antennas, which can further ensure that the receive UCA can receive beams in specific OAM states, to implement self-interference cancellation.

For example, an OAM state of each received beam meets the following condition: $L_{RX} = \left[ l_1^{RX}, l_2^{RX}, \cdots, l_q^{RX}, \ldots, l_Q^{RX} \right]^T$, where q represents a $q^{th}$ received beam, $l_q^{RX}$ represents an OAM state of the $q^{th}$ received beam, Q represents a quantity of received beams, q is a positive integer less than or equal to Q, and Q is a positive integer. That is, the OAM state of the received beam is generally selected from the set $L_{RX}$. Alternatively, Q may be understood as Q receiver radio frequency links, that is, there are Q receiver radio frequency links in which the receive antenna array is located. Alternatively, Q may be understood as Q received beam output ports, the Q received beam output ports are located on the feeding network, the feeding network may synthesize Q signals of the receive UCA through the Q received beam output ports.

Optionally, the receive UCA may include one annular array, that is, the receive UCA is located on one annular array.

Alternatively, the receive UCA may include a plurality of concentric and coaxial annular arrays, that is, the receive UCA may be located on different annular arrays.

The transmit UCA and the receive UCA are concentric and coaxial, which may be completely aligned in $\varphi$ in a spherical coordinate system, or may be staggered by a specific angle $\Delta\varphi$. In this way, electromagnetic waves carrying different OAM states are orthogonal to each other when transmitted coaxially in space. When the receive UCA and the transmit UCA are concentric and coaxial, self-interference cancellation may be implemented by selecting the OAM states of the received beams and the transmitted beams. Specifically, all elements of a transmission matrix between a transmitted beam input port of the feeding network and a received beam output port of the feeding network are 0.

A transmission matrix between the P transmitted beam input ports and the Q received beam output ports meets the following formula: $H_{RX,TX} = \Phi_{TX} H_c \Phi_{RX}^T$, where $H_{RX,TX}$ is the transmission matrix between the P transmitted beam input ports and the Q received beam output ports, $\Phi_{TX}$ is a transmission matrix of the transmitter feeding network, $\Phi_{RX}$ is a transmission matrix of the receiver feeding network, and $H_c$ is a coupling matrix between the transmit UCA and the receive UCA.

The coupling matrix H between the transmit UCA and the receive UCA meets the following formula:

$$H_c = \begin{bmatrix} \beta_{TX(1),RX(1)} & L & \beta_{TX(1),RX(M)} \\ M & O & M \\ \beta_{TX(N),RX(1)} & L & \beta_{TX(N),RX(M)} \end{bmatrix}$$

, where $\beta_{TX(n),RX(m)}$ is a coupling coefficient from the $n^{th}$ transmit antenna to the $m^{th}$ receive antenna. When the quantity M of transmit antennas of the transmit UCA is equal to the quantity $N$ of receive antennas of the receive UCA, the coupling matrix $H_c$ meets rotational symmetry, that is, for any $1 \le k < N$, $\beta_{TX(n),RX(m)} = \beta_{TX((n+k)\bmod N),RX((m+k)\bmod M)}$. The coupling matrix $H_c$ between the transmit UCA and the receive UCA meets the following

formula: $$H_c = \begin{bmatrix} \beta_1 & \beta_2 & \beta_3 & L & \beta_N \\ \beta_N & \beta_1 & \beta_2 & L & \beta_{N-1} \\ \beta_{N-1} & \beta_N & \beta_1 & L & \beta_{N-2} \\ M & M & M & O & M \\ \beta_2 & \beta_3 & \beta_4 & L & \beta_1 \end{bmatrix}.$$

Before S602, the full-duplex communication apparatus may further adjust a phase of each receive antenna in the receive antenna array. A phase of an $m^{th}$ receive antenna in each receive antenna is determined based on the OAM states $L_{RX}$ of the received beams and the quantity M of receive antennas of the receive antenna array, m is a positive integer less than or equal to M, and M is a positive integer. For example, the phase of the $m^{th}$ receive antenna in the M receive antennas meets the following condition: $\varphi_{q,m}^{RX} = l_q^{RX} \dfrac{2\pi(m-1)}{M}$ , where $\varphi_{q,m}^{RX}$ represents a phase of the m$^{th}$ receive antenna when a q$^{th}$ received beam output port is excited.

Optionally, the full-duplex communication apparatus may further adjust an initial phase of the received beams by using the phase shifter. The feeding network is located between the phase shifter and the transmit antenna array.

S603. Feed the transmit antenna array and synthesize signals of the receive antenna array by using the feeding network. The full-duplex communication apparatus may further synthesize signals of the receive antenna array by using the feeding network. Specifically, the feeding network synthesizes radio frequency signals received by array elements of the receive antenna array into radio frequency signals representing beams in different OAM states.

The full-duplex communication apparatus may process the received beams in the OAM states that are received by the receive antenna array, to implement communication between the full-duplex communication apparatus and another device. For a specific implementation process, refer to the following embodiment of the full-duplex communication apparatus.

In conclusion, in this embodiment of this application, to eliminate self-interference, the antenna array is a UCA, the UCA is configured to transmit transmitted beams in OAM states and receive received beams in OAM states, and the antenna array needs to meet a preset condition including: a quantity of transmit antennas of the transmit antenna array is equal to a quantity of receive antennas of the receive antenna array, and the OAM states of the transmitted beams are not equal to opposite numbers of the OAM states of the received beams.

According to the method provided in this embodiment of this application, antenna quantities of the transmit and receive antenna arrays are equal, the full-duplex communication apparatus transmits transmitted beams in different OAM states by using the transmit UCA, and receives received beams in different OAM states by using the receive UCA, and the OAM states of the transmitted beams are not equal to opposite numbers of the OAM states of the received beams, so that self-interference cancellation is implemented by using orthogonality of the OAM states. In addition, in this application, beamforming may be further implemented by simultaneously generating a plurality of transmitted beams in continuous OAM states, to resolve a problem of an energy hole in an OAM beam center.

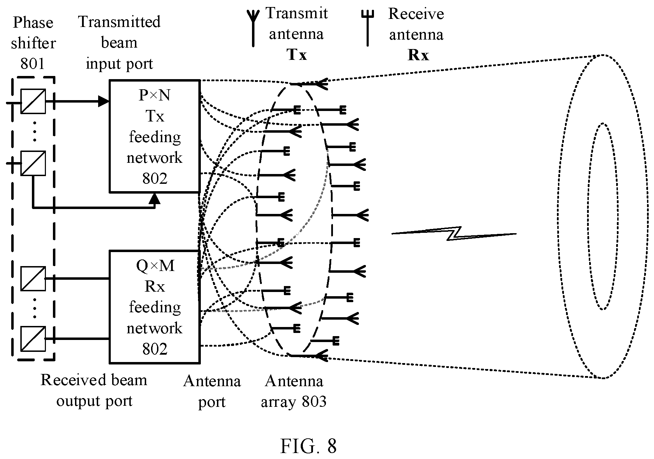

Based on the foregoing description of the principle of the full-duplex communication method, the following describes in detail a possible full-duplex communication apparatus provided in an embodiment of this application. As shown in FIG. 8, the full-duplex communication apparatus includes a phase shifter 801, a feeding network 802, and an antenna array 803. The feeding network 802 is located between the phase shifter 801 and the antenna array 803. The antenna array 803 includes a transmit antenna array and a receive antenna array. To implement self-interference cancellation, the antenna array is a UCA, and the UCA is configured to transmit transmitted beams in different OAM states and receive received beams in different OAM states.

The antenna array meets a preset condition, and the preset condition includes: a quantity of transmit antennas of the transmit antenna array is equal to a quantity of receive antennas of the receive antenna array, and the OAM states of the transmitted beams are not equal to opposite numbers of the OAM states of the received beams.

For example, the full-duplex communication apparatus includes P transmitter radio frequency links and Q receiver radio frequency links. Each radio frequency link includes an independent phase shifter. For example, the P transmitter radio frequency links include P phase shifters 801, and the Q receiver radio frequency links include Q phase shifters 801.

The phase shifter 801 is configured to adjust an initial phase $\varphi_0$ of the transmitted beams and/or the received beams, and may control energy of the beams to be concentrated in a specific $\varphi$ direction, for example, a region in which a terminal device is located, to further implement beamforming. For example, the phase shifter 801 is configured to adjust an initial phase of the OAM states of the transmitted beams and/or an initial phase of the OAM states of the received beams. Optionally, the initial phase of the OAM states of the transmitted beams is the same as the initial phase of the OAM states of the received beams, that is, the phase shifter 801 is configured to adjust a common initial phase to all the OAM states. Optionally, for the transmitter radio frequency link, the phase shifter is located between an amplifier (for example, a PA) and a transmitter feeding network, or the amplifier is located between the phase shifter and the transmitter feeding network. For the receiver radio frequency link, the phase shifter is located between an amplifier (for example, an LNA) and a receiver feeding network, or the amplifier is located between the phase shifter and the receiver feeding network.

The feeding network 802 may include the transmitter feeding network and the receiver feeding network. The transmitter feeding network and the receiver feeding network may share a feeding network, or the transmitter feeding network and the receiver feeding network may use independent feeding networks. The transmitter feeding network is configured to feed the transmit UCA, to excite the transmit UCA to generate and transmit the transmitted beams in different OAM states. The receiver feeding network is configured to synthesize signals received by the receive UCA, to control the receive UCA to receive received beams in specific OAM states.

In a possible implementation, if the transmitter feeding network and the receiver feeding network share a same feeding network, the full-duplex communication apparatus may further include one or more power splitters, and the power splitter is located between the feeding network and the antenna array. The power splitter is configured to split one input signal into a plurality of output signals, to more easily eliminate self-interference. Optionally, the power splitter includes an even power splitter and/or an uneven power splitter. The even power splitter is configured to split one input signal into a plurality of output signals with equal power. The uneven power splitter is configured to perform power distribution on an input signal based on a proportion. For example, the uneven power splitter performs power distribution on an input signal based on a proportion, and splits the input signal into a first signal and a second signal, and power of the first signal and the second signal is not equal. This further helps improve energy utilization of the input signal. It may be understood that, in an actual communication system, a function implemented by the power splitter may alternatively be implemented by using a power splitting module such as a directional coupler or a balun. For example, the transmitter feeding network includes P transmitted beam input ports and N transmit antenna output ports, and the transmitter feeding network is also referred to as a P*N transmitter feeding network. The receiver feeding network includes Q received beam output ports and M receive antenna input ports, and the receiver feeding network is also referred to as a Q*M receiver feeding network.

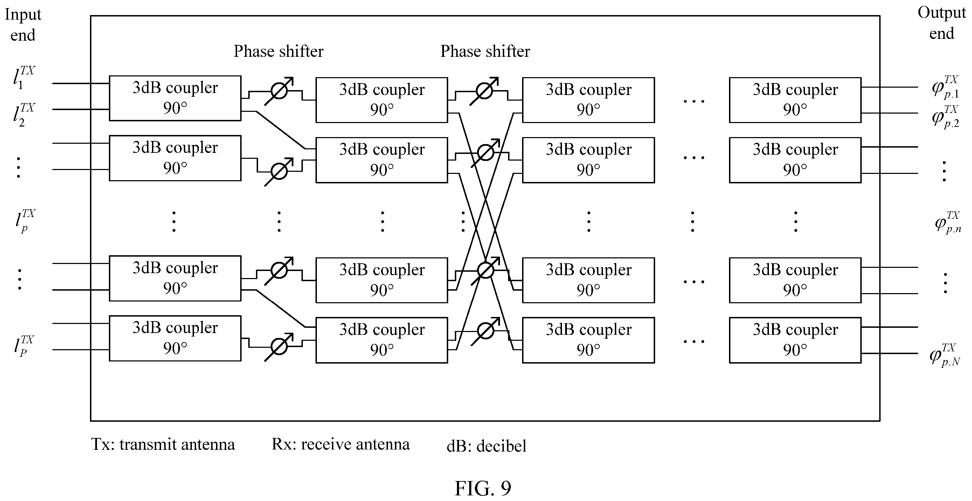

Specific implementation forms of the transmitter feeding network and the receiver feeding network include but are not limited to one or more of the following: a Butler matrix, a Rotman lens, and the like. For example, a schematic diagram of implementing a P*N transmitter feeding network by using a Butler matrix is shown in FIG. 9.

The transmit antenna array is a transmit UCA, and the transmit UCA is configured to generate and transmit the transmitted beams in different OAM states. The receive antenna array is a receive UCA, and the receive UCA is configured to receive the received beams in different OAM states. For example, the transmit UCA includes N transmit antennas, that is, includes N transmit antenna array elements. The receive UCA includes M receive antennas, that is, includes M receive antenna array elements.

For example, an OAM state of each transmitted beam meets the following condition:

$$L_{TX} = \left[ l_1^{TX}, l_2^{TX}, \cdots, l_p^{TX}, \ldots, l_P^{TX} \right]^T$$, where p represents a p$^{th}$ transmitted beam, $l_p^{TX}$ represents an OAM state of the p$^{th}$ transmitted beam, P represents a quantity of transmitted beams, p is a positive integer less than or equal to P, and P is a positive integer. That is, the OAM state of the transmitted beam is generally selected from the set $L_{TX}$. Alternatively, P may be understood as P transmitter radio frequency links, that is, there are P transmitter radio frequency links in which the transmit antenna array is located. Alternatively, P may be understood as P transmitted beam input ports, the P transmitted beam input ports are located on the feeding network, the feeding network may excite, through the P transmitted beam input ports, the transmit UCA to generate and transmit P transmitted beams.

For example, an OAM state of each received beam meets the following condition:

$$L_{RX} = \left[ l_1^{RX}, l_2^{RX}, \cdots, l_q^{RX}, \ldots, l_Q^{RX} \right]^T$$, where q represents a q$^{th}$ received beam output port, $l_q^{RX}$ represents an OAM state of the q$^{th}$ received beam, Q represents a quantity of received beams, q is a positive integer less than or equal to Q, and Q is a positive integer. That is, the OAM state of the received beam is generally selected from the set $L_{RX}$. Alternatively, Q may be understood as Q receiver radio frequency links, that is, there are Q receiver radio frequency links in which the receive antenna array is located. Alternatively, Q may be understood as Q received beam output ports, the Q received beam output ports are located on the feeding network, the feeding network may synthesize Q signals of the receive UCA through the Q received beam output ports.

The transmitter feeding network and the transmit antenna array are located in the transmitter radio frequency link, and the receiver feeding network and the receive antenna array are located in the receiver radio frequency link.

The preset condition may further include: absolute values of the OAM states of the transmitted beams are less than a half of the quantity of transmit antennas; and absolute values of the OAM states of the received beams are less than a half of the quantity of receive antennas. This can further ensure that the transmit UCA can generate beams in OAM states, to implement self-interference cancellation.

Optionally, a radius of the transmit UCA may be the same as or different from a radius of the receive UCA. If the radius of the transmit UCA is the same as the radius of the receive UCA, the transmit antenna array and the receive antenna array share an antenna array, or the transmit antenna array and the receive antenna array are independent antenna arrays. If the radius of the transmit UCA is different from the radius of the receive UCA, the transmit antenna array and the receive antenna array are independent antenna arrays.

In a possible implementation, the transmit antenna array and the receive antenna array share an antenna array, the apparatus further includes one or more circulators, and the circulator is located between the feeding network and the antenna array. The circulator is a unilaterally-conductive 3-port component, and the circulator is configured for transmission and reception multiplexing of the antennas. Optionally, if there are a plurality of circulators, characteristic parameters of all the circulators are the same, and/or physical structures and sizes of all the circulators are the same. In addition, isolation between transmit and receive antennas is improved by using a specific antenna design, so that a better self-interference cancellation effect can be achieved in combination with the full-duplex communication method provided in the embodiments of this application.

Antenna types of the transmit antenna and the receive antenna include but are not limited to one or more of the following: a patch antenna, a monopole antenna, a dipole antenna, a tripole antenna, or the like.

The UCA is circular, and spacings between antenna array elements in the UCA are equal. Specifically, spacings between antenna array elements in the transmit UCA are equal, and spacings between antenna array elements in the receive UCA are equal.

A rotation angle of an array element of the transmit antenna array relative to a first array element of the transmit antenna array is determined based on the quantity of array elements of the transmit antenna array and a number of the array element of the transmit antenna array. The rotation angle of the array element of the transmit antenna array relative to the first array element of the transmit antenna array may be used to identify circumferential position distribution of the array element. The number of the array element of the transmit antenna array may be used to identify the array element relative to the first array element. For example, the rotation angle of the array element of the transmit antenna array relative to the first array element of the transmit antenna array meets the following condition: $\phi_{TX} = \Delta\phi_{TX} + \dfrac{2\pi}{N} \cdot [0, 1, L\ N-1]$,

where $\Delta\phi_{TX}$ is any value, and represents an offset of the first array element relative to a circumferential position $\varphi = 0$, $\dfrac{2\pi}{N}$ represents a spacing between the array elements of the transmit antenna array, [0,1, ... $N$-1] represents a set of numbers of the array elements in the transmit antenna array, a first array element is numbered 0, a second array element is numbered 1, an $N^{th}$ array element is numbered N-1, N is the quantity of transmit antennas in the transmit antenna array, and N is a positive integer. Optionally, the first array element of the transmit antenna array may be a preset first array element, or may be a randomly selected first array element, or the like.

A rotation angle of an array element of the receive antenna array relative to a first array element of the receive antenna array is determined based on the quantity of array elements of the receive antenna array and a number of the array element of the receive antenna array. The rotation angle of the array element of the receive antenna array relative to the first array element of the receive antenna array may be used to identify circumferential position distribution of the array element. The number of the array element of the receive antenna array may be used to identify the array element relative to the first array element. For example, $\phi_{RX} = \Delta\phi_{RX} + \dfrac{2\pi}{M} \cdot [0, 1, L\ M-1]$, where $\Delta\phi_{RX}$ is any value, and represents an offset of the first array element relative to a circumferential position $\varphi = 0$, $\dfrac{2\pi}{M}$ represents a spacing between the array elements of the receive antenna array, [0,1,L M-1] represents a set of numbers of the array elements in the receive antenna array, a first array element is numbered 0, a second array element is numbered 1, an $M^{th}$ array element is numbered M-1, M is the quantity of receive antennas in the receive antenna array, and M is a positive integer. Optionally, the first array element of the receive antenna array may be a preset first array element, or may be a randomly selected first array element, or the like.

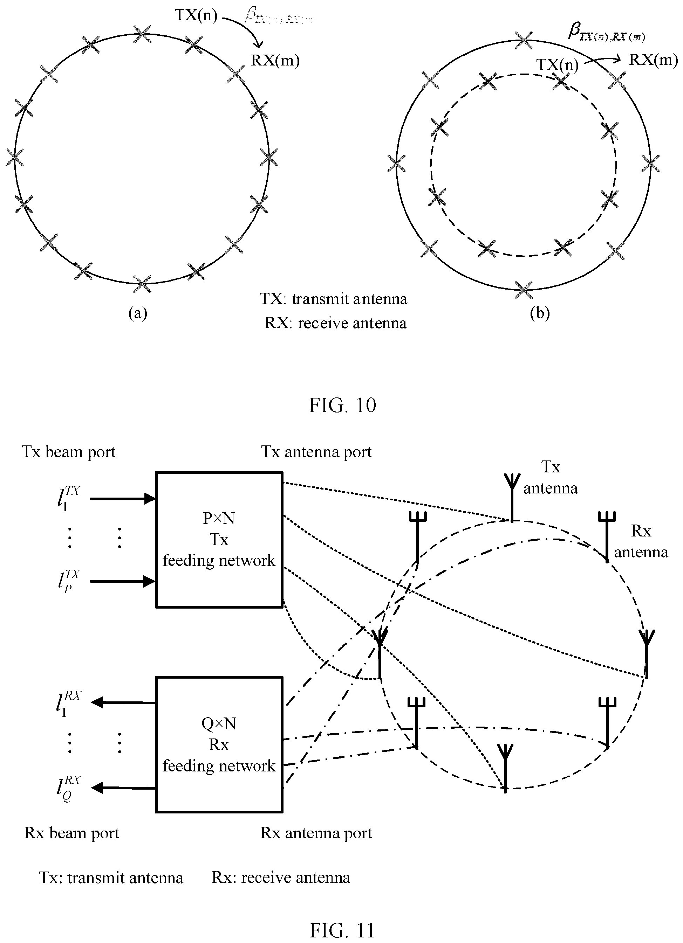

Optionally, as shown in (a) and (b) of FIG. 10, a coupling coefficient from an $n^{th}$ transmit antenna to an $m^{th}$ receive antenna is $\beta_{TX(n),RX(m)}$. A coupling matrix $H_c$ between the transmit UCA and the receive UCA meets the following condition:

$$H_c = \begin{bmatrix} \beta_{TX(1),RX(1)} & L & \beta_{TX(1),RX(M)} \\ M & O & M \\ \beta_{TX(N),RX(1)} & L & \beta_{TX(N),RX(M)} \end{bmatrix}.$$

Optionally, the N transmit antennas are respectively connected to N antenna ports of the transmitter feeding network. The transmitter feeding network may adjust a phase of each of the N transmit antennas of the transmit UCA. A phase of the $n^{th}$ transmit antenna in each transmit antenna is determined based on the OAM states $L_{TX}$ of the transmitted beams and the quantity N of transmit antennas of the transmit antenna array, n is a positive integer less than or equal to N, and N is a positive integer. For example, the phase of the $n^{th}$ transmit antenna in the N transmit antennas meets the following condition: $\varphi_{p,n}^{TX} = l_p^{TX} \dfrac{2\pi(n-1)}{N}$, where $\varphi_{p,n}^{TX}$ represents a phase of the $n^{th}$ transmit antenna when a $p^{th}$ transmitted beam input port is excited.

In (a) of FIG. 10, a radius of the transmit UCA (TX) and a radius of the receive UCA (RX) are the same. In (b) of FIG. 10, a radius of the transmit UCA (TX) and a radius of the receive UCA (RX) are different.

Optionally, the M receive antennas are respectively connected to M antenna ports of the receiver feeding network. The receiver feeding network may adjust a phase of each of the M receive antennas of the receive UCA. A phase of the $m^{th}$ receive antenna in each receive antenna is determined based on the OAM states $L_{RX}$ of the received beams and the quantity M of receive antennas of the receive antenna array, m is a positive integer less than or equal to M, and M is a positive integer. For example, the phase of the $m^{th}$ receive antenna in the M receive antennas meets the following

condition: $\varphi_{q,m}^{RX} = l_q^{RX} \dfrac{2\pi(m-1)}{M}$, where $\varphi_{q,m}^{RX}$ represents a phase of the $m^{th}$ receive antenna when a $q^{th}$ received beam output port is excited.

The transmitter feeding network is determined based on a phase of each transmit antenna corresponding to the OAM state of each transmitted beam. For example, the P*N transmitter feeding network meets the following condition:

$$\Phi_{TX} = L_{TX}\phi_{TX} = \begin{bmatrix} e^{-j\varphi_{1,1}^{TX}} & \mathrm{L} & e^{-j\varphi_{1,N}^{TX}} \\ \mathrm{M} & \mathrm{O} & \mathrm{M} \\ e^{-j\varphi_{P,1}^{TX}} & \mathrm{L} & e^{-j\varphi_{P,N}^{TX}} \end{bmatrix}$$, where $\Phi_{TX}$ is a transmission matrix of the transmitter feeding network, $L_{TX}$ is OAM states of P transmitted beams corresponding to P transmitted beam input ports,

$\phi_{TX} = \Delta\phi_{TX} + \dfrac{2\pi}{N}\cdot[0,1,\mathrm{L}\ N-1]$ is circumferential position of an array element of the transmit UCA, $\Delta\phi_{TX}$ is any

value, N is the quantity of transmit antennas, and N is a positive integer.

The receiver feeding network is determined based on a phase of each receive antenna corresponding to the OAM state of each received beam. For example, the Q*M receiver feeding network meets the following condition:

$$\Phi_{RX} = L_{RX}\phi_{RX} = \begin{bmatrix} e^{-j\varphi_{1,1}^{RX}} & \mathrm{L} & e^{-j\varphi_{1,M}^{RX}} \\ \mathrm{M} & \mathrm{O} & \mathrm{M} \\ e^{-j\varphi_{Q,1}^{RX}} & \mathrm{L} & e^{-j\varphi_{Q,M}^{RX}} \end{bmatrix}$$, where $\Phi_{RX}$ is a transmission matrix of the receiver feeding network,

$L_{RX}$ is OAM states of Q to-be-received beams corresponding to Q received beam output ports,

$\phi_{RX} = \Delta\phi_{RX} + \dfrac{2\pi}{M}\cdot[0,1,\mathrm{L}\ M-1]$ is circumferential position of an array element of the receive UCA, $\Delta\phi_{RX}$ is

any value, M is the quantity of receive antennas, and M is a positive integer.

All elements of a transmission matrix between a transmitted beam input port of the feeding network and a received beam output port of the feeding network are 0, so that self-interference cancellation can be implemented. The transmission matrix between the transmitted beam input port and the received beam output port is $H_{RX,TX} = \Phi_{TX}H_c\Phi_{RX}^T = L_{TX}\phi_{TX}H_c\phi_{RX}^T L_{RX}^T$. Theoretical derivation is performed by using an example in which the antenna array in the full-duplex communication apparatus meets a preset condition. The preset condition includes N=M (that is, the quantity of transmit antennas is equal to the quantity of receive antennas), $l_p^{TX} \neq -l_q^{RX}$ (that is, the OAM states of the transmitted beams are not equal to opposite numbers of the OAM states of the received beams), $\left|l_p^{TX}\right| < N/2$ (that is, absolute values of the OAM states of the transmitted beams are less than a half of the quantity of transmit antennas), and $\left|l_q^{RX}\right| < M/2$ (that is, absolute values of the OAM states of the received beams are less than a half of the quantity of receive antennas). A theoretical derivation result is as follows:

When N=M, the coupling matrix $H_c$ between the transmit UCA and the receive UCA meets rotational symmetry, that is, for any $1 \leq k < N$, $\beta_{TX(n),RX(m)} = \beta_{TX((n+k)\bmod N),RX((m+k)\bmod M)}$. The coupling matrix $H_c$ between the transmit UCA and the receive

$$H_c = \begin{bmatrix} \beta_1 & \beta_2 & \beta_3 & L & \beta_N \\ \beta_N & \beta_1 & \beta_2 & L & \beta_{N-1} \\ \beta_{N-1} & \beta_N & \beta_1 & L & \beta_{N-2} \\ M & M & M & O & M \\ \beta_2 & \beta_3 & \beta_4 & L & \beta_1 \end{bmatrix}$$

array meets the following formula: , that is, the coupling matrix may be represented in a form of a circulant matrix.

Then, a transmission coefficient $H_{RX,TX}(q,p)$ from the $p^{th}$ transmitted beam port to the $q^{th}$ received beam port is as follows:

$$
\begin{aligned}
H_{RX,TX}(q,p) &= \sum_{n=1}^{N} \beta_n \left( \sum_{m=1}^{N-n+1} e^{-j\varphi_{p,m}^{TX}} e^{-j\varphi_{q,n+m-1}^{RX}} + \sum_{m=N-n+2}^{N} e^{-j\varphi_{p,m}^{TX}} e^{-j\varphi_{q,n+m-1-N}^{RX}} \right) \\
&= \sum_{n=1}^{N} \beta_n \left( \sum_{m=1}^{N-n+1} e^{-j\varphi_{p,m}^{TX}} e^{-j\varphi_{q,n+m-1}^{RX}} + \sum_{m=N-n+2}^{N} e^{-j\varphi_{p,m}^{TX}} e^{-j\varphi_{q,n+m-1}^{RX}} \right) \\
&= \sum_{n=1}^{N} \beta_n \left( \sum_{m=1}^{N} e^{-j\varphi_{p,m}^{TX}} e^{-j\varphi_{q,n+m-1}^{RX}} \right) \\
&= \sum_{n=1}^{N} \beta_n \left( \sum_{m=1}^{N} e^{-jl_p^{TX}\frac{2\pi(m-1)}{N}} e^{-jl_q^{RX}\frac{2\pi(n+m-2)}{N}} \right) \\
&= \sum_{n=1}^{N} \beta_n e^{-jl_q^{RX}\frac{2\pi(n-1)}{N}} \left( \sum_{m=1}^{N} e^{-j(l_p^{TX}+l_q^{RX})\frac{2\pi(m-1)}{N}} \right) \\
&= \begin{cases} \sum_{n=1}^{N} \beta_n e^{-jl_q^{RX}\frac{2\pi(n-1)}{N}} \dfrac{1-e^{-j2\pi(l_p^{TX}+l_q^{RX})}}{1-e^{-j2\pi\frac{(l_p^{TX}+l_q^{RX})}{N}}} = 0, & \forall p \in [1,P], q \in [1,Q], l_p^{TX} \neq -l_q^{RX} \\ N\sum_{n=1}^{N} \beta_n e^{-jl_q^{RX}\frac{2\pi(n-1)}{N}}, & \text{others} \end{cases}
\end{aligned}
$$

It can be learned that when the preset condition is met, all the elements of the transmission matrix $H_{RX,TX}$ between the transmitted beam input port of the feeding network and the received beam output port of the feeding network are 0, so that self-interference cancellation can be implemented. When the preset condition is not met, an element in the transmission matrix $H_{RX,TX}$ between the transmitted beam input port and the received beam output port is a non-zero value, and self-interference cancellation cannot be implemented.

In addition, optionally, the full-duplex communication apparatus may further resolve an energy hole problem. The full-duplex communication apparatus may implement three-dimensional beamforming and beam scanning by changing an initial phase and a mode combination of beams, thereby resolving the energy hole problem. The transmit UCA is configured to simultaneously generate a plurality of transmitted beams in continuous OAM states. A beam width of a beam formed by superposing the plurality of transmitted beams in space is inversely proportional to a quantity of excited transmitted beams. For example, the transmit UCA may adjust rotation angles of main lobe directions of the plurality of transmitted beams relative to a first position to implement beam scanning. The first position is a preset reference position of a main lobe of a beam when a value of the phase shifter is 0. In this way, a plurality of transmitted beams in continuous OAM states are excited simultaneously, and as a quantity of OAM beams in different modes increases, energy distribution of the transmitted beams changes from uniform distribution of each phase in single-mode excitation to converging to a specific direction, thereby avoiding an energy hole in a beam center direction.

The value $\Delta\varphi$ of the phase shifter is determined based on an initial phase $\Delta\varphi$ and an OAM mode $l$ of the beam.

For example, a value $\Delta\varphi_p^{TX}$ of a phase shifter meets the following condition: $\Delta\varphi_p^{TX} = l_p^{TX}\varphi_0$.

In a beamforming process, if P transmitted beams in OAM states are generated simultaneously, a far-field electric field of the P transmitted beams in the OAM states is determined based on the radius of the transmit UCA, the OAM states of the transmitted beams, and the initial phase of the OAM states of the transmitted beams and the received beams. For example, the far-field electric field of the P transmitted beams in the OAM states meets the following condition:

$$E_{bf}\left(r,\theta,\varphi\right) = -j_e \frac{\mu_0 \omega d}{4\pi} N \frac{e^{-jkr}}{r} \sum_{p=1}^{P} j^{l_p^{TX}} e^{-jl_p^{TX}(\varphi+\varphi_0)} J_{l_p^{TX}}\left(ka\sin\theta\right)$$ , where $E_{bf}(r,\theta,\varphi)$ is a far-field electric field of a beam formed by superposing the P transmitted beams in space, $\mu_0$ is a magnetic permeability of vacuum, $\omega$ is an angular frequency, $k$ is a wave number, $j_e$ is a current density of an electric dipole, d is a length of the electric dipole, $a$ is the radius of the transmit UCA, $J_l$ is an $l$-order Bessel function, $l_p^{TX}$ is an element in $L_{TX}$, $\varphi_0$ is the initial phase of the OAM states of the transmitted beams and the received beams, $k$ meets k = $\omega$ / c, and c is a speed of light in vacuum. That is, the far-field electric field of the P transmitted beams in the OAM states may be represented in a form of a superposition of a plurality of single-mode OAM beams. For example, a far-field electric field of a single-mode OAM beam meets the following condition in a spherical coordinate system:  $$E\left(r,\theta,\varphi\right) = -j_e \frac{\mu_0 \omega d}{4\pi} Nj^l \frac{e^{-jkr}}{r} e^{-jl^{TX}\varphi} J_l\left(ka\sin\theta\right)$$ .

Optionally, the transmitter feeding network may further adjust a degree of $\theta_{ml}$ of a main lobe of the transmitted beam and/or a degree of $\varphi_{ml}$ of the main lobe of the transmitted beam, to implement beam scanning in a $\theta$ direction and/or beam scanning in a $\varphi$ direction. The transmitter feeding network may adjust the degree of $\theta$ of the main lobe of the transmitted beam by using OAM beams in different modes. The phase shifter may adjust the degree of $\varphi$ of the main lobe of the transmitted beam by changing the initial phase $\varphi_0$ of the transmitted beam.

Optionally, the transmitter feeding network may further adjust a quantity of main lobes of the transmitted beam. The transmitter feeding network may adjust the quantity of main lobes of the transmitted beam by adjusting a spacing between OAM states in $L_{TX}$. Generally, the spacing between the OAM states in $L_{TX}$ is equal to the quantity of main lobes of the transmitted beam.

Based on the foregoing full-duplex communication apparatus architecture, the following provides several possible embodiments, to achieve an effect of self-interference cancellation and resolve a problem of an energy hole in a beam center.

Embodiment 1: As shown in FIG. 11, the transmitter feeding network and the receiver feeding network use independent feeding networks, and a radius of the transmit UCA and a radius of the receive UCA are the same, but the transmit UCA and the receive UCA use independent antenna arrays. The full-duplex communication apparatus performs the following method procedure:

Step 1: Select an OAM state combination $L_{TX} = \left[l_1^{TX}, l_2^{TX}, \mathrm{L}\ \ l_p^{TX}, \mathrm{K}\ \ l_P^{TX}\right]^T$ of transmitted beams and an OAM state combination $L_{RX} = \left[l_1^{RX}, l_2^{RX}, \mathrm{L}\ \ l_q^{RX}, \mathrm{K}\ \ l_Q^{RX}\right]^T$ of received beams. OAM states of the transmitted beams are not equal to opposite numbers of OAM states of the received beams, that is, $p \in [1,P]$, $q \in [1,Q]$, and $l_p^{TX} \neq -l_q^{RX}$ .

Step 2: Design a corresponding P-input N-output transmitter feeding network based on $L_{TX}$, and design a corresponding Q-input M-output transmitter feeding network based on $L_{RX}$. N=M. For a transmitter radio frequency link, when a $p^{th}$ transmitted beam input port is excited, a phase of an $n^{th}$ transmit antenna meets $\varphi_{p,n}^{TX} = l_p^{TX} \frac{2\pi(n-1)}{N}$ .

For a receiver radio frequency link, when a $q^{th}$ received beam output port is excited, a phase of an $m^{th}$ receive antenna

meets $\varphi_{q,m}^{RX} = l_q^{RX} \frac{2\pi(m-1)}{N}$ .

Step 3: Place the transmit UCA and the receive UCA on a same circumference. Circumferential distribution of the array elements in the transmit UCA meets $\phi_{TX} = \Delta\phi_{TX} + \frac{2\pi}{N} \cdot \left[0,1,\mathrm{L}\ \ N-1\right]$ , circumferential distribution of the array elements in the receive UCA meets $\phi_{RX} = \Delta\phi_{RX} + \frac{2\pi}{N} \cdot \left[0,1,\mathrm{L}\ \ N-1\right]$ , and values of $\Delta\phi_{TX}$ and $\Delta\phi_{RX}$ are

not limited.

Step 4: Respectively connect N antenna ports of the transmitter feeding network to the N transmit antennas of the transmit UCA, and respectively connect M antenna ports of the receiver feeding network to the M receive antennas of the receive UCA.

Step 5: Based on a required waveform, choose to excite all or some transmitted beams in OAM states, and choose to receive all or some received beams in OAM states, and perform beam scanning by using the phase shifter. When a circumferential angle of a main lobe of the beam is $\varphi_0$, a value, corresponding to a $p^{th}$ transmitted beam port, of the phase shifter meets $\Delta\varphi_p^{TX} = l_p^{TX}\varphi_0$ , and a value, corresponding to a $q^{th}$ received beam port, of the phase shifter meets $\Delta\varphi_q^{RX} = l_q^{RX}\varphi_0$ .

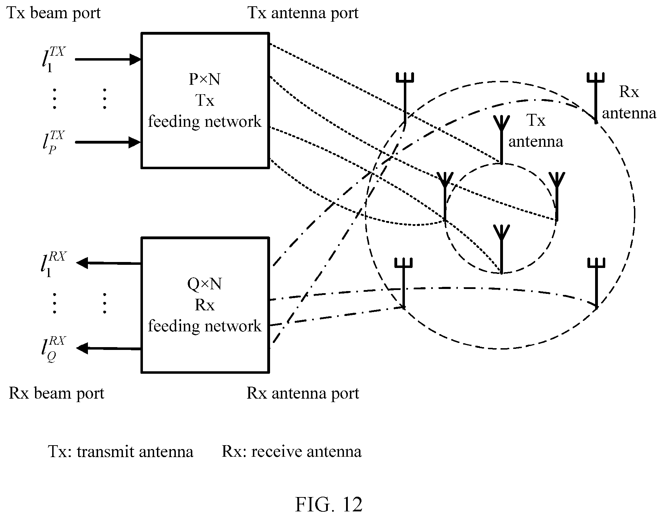

Embodiment 2: As shown in FIG. 12, the transmitter feeding network and the receiver feeding network use independent feeding networks, and a radius of the transmit UCA and a radius of the receive UCA are different, and the transmit UCA and the receive UCA use independent antenna arrays. The full-duplex communication apparatus performs the following method procedure:

For steps 1 and 2, refer to steps 1 and 2 in Embodiment 1.

Step 3: Place the transmit UCA and the receive UCA on two concentric circles whose radii are $r_{TX}$ and $r_{RX}$. Values of $r_{TX}$ and $r_{RX}$ are not limited but $r_{TX} \neq r_{RX}$, circumferential distribution of the array elements in the transmit UCA meets $\phi_{TX} = \Delta\phi_{TX} + \dfrac{2\pi}{N}\cdot[0,1,\text{L}\ \ N-1]$ , circumferential distribution of the array elements in the receive UCA meets $\phi_{RX} = \Delta\phi_{RX} + \dfrac{2\pi}{N}\cdot[0,1,\text{L}\ \ N-1]$ , and values of $\Delta\phi_{TX}$ and $\Delta\phi_{RX}$ are not limited.

Step 4: Respectively connect N antenna ports of the transmitter feeding network to the N transmit antennas of the transmit UCA, and respectively connect M antenna ports of the receiver feeding network to the M receive antennas of the receive UCA.

For step 5, refer to step 5 in Embodiment 1.

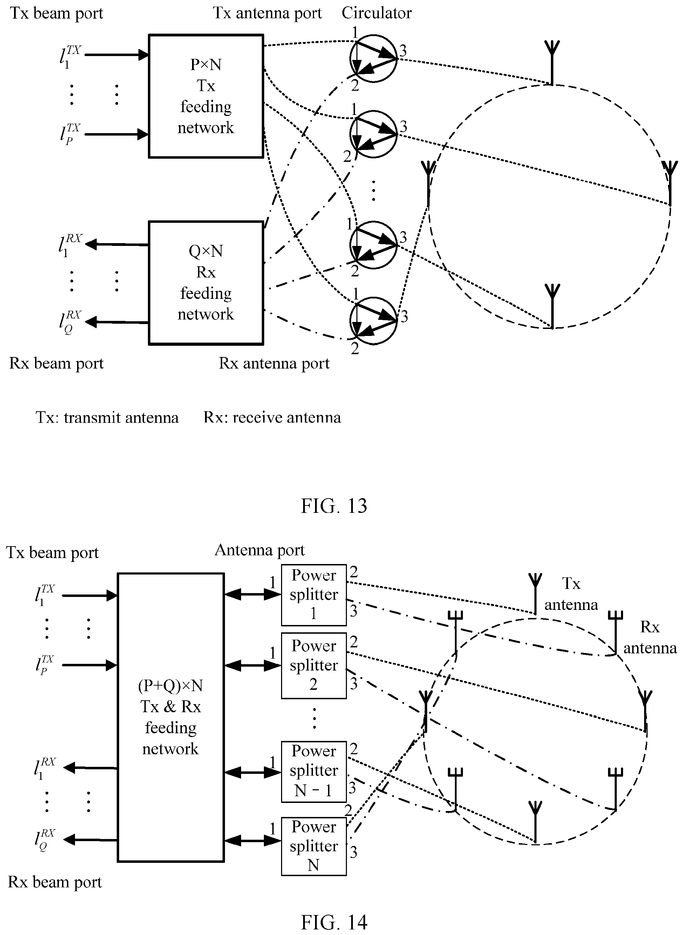

Embodiment 3: As shown in FIG. 13, the transmitter feeding network and the receiver feeding network use independent feeding networks, and a radius of the transmit UCA and a radius of the receive UCA are the same, and the transmit UCA and the receive UCA share an antenna array. The full-duplex communication apparatus performs the following method procedure:

For step 1 and step 2, refer to steps 1 and 2 in Embodiment 1.

Step 3: Place the antenna arrays on a same circumference. A circumferential position part on the UCA meets $\phi = \Delta\phi + \dfrac{2\pi}{N}\cdot[0,1,\text{L}\ \ N-1]$ , and a value of $\Delta\phi$ is not limited.

Step 4: Connect an $n^{th}$ antenna port of the transmitter feeding network to a port 1 of an $n^{th}$ circulator, connect an $n^{th}$ antenna port of the receiver feeding network to a port 2 of the $n^{th}$ circulator, and connect a port 3 of the $n^{th}$ circulator to an $n^{th}$ antenna of the UCA.

For step 5, refer to step 5 in Embodiment 1.

Embodiment 4: As shown in FIG. 14, the transmitter feeding network and the receiver feeding network share a same feeding network, and a radius of the transmit UCA and a radius of the receive UCA are the same, and the transmit UCA and the receive UCA use independent antenna arrays. The full-duplex communication apparatus performs the following method procedure:

For step 1, refer to step 1 in Embodiment 1.

Step 2: Design a corresponding feeding network with P+Q input ports and N output ports based on $L_{TX}$ and $L_{RX}$. For a transmitter radio frequency link, when a $p^{th}$ input port is excited, a phase of an $n^{th}$ transmit antenna is $\varphi_{p,n} = l_p^{TX}\dfrac{2\pi(n-1)}{N}$ . For a receiver radio frequency link, when a $q^{th}$ received beam output port is excited, a phase of an $n^{th}$ receive antenna meets $\varphi_{q,n} = l_q^{RX}\dfrac{2\pi(n-1)}{N}$ .

For step 3, refer to step 3 in Embodiment 1.

Step 4: Connect an $n^{th}$ antenna port of the feeding network to a port 1 of an $n^{th}$ power splitter, and respectively connect a port 2 and a port 3 of the $n^{th}$ power splitter to an $n^{th}$ transmit antenna and an $n^{th}$ receive antenna on the UCAs.

For step 5, refer to step 5 in Embodiment 1.

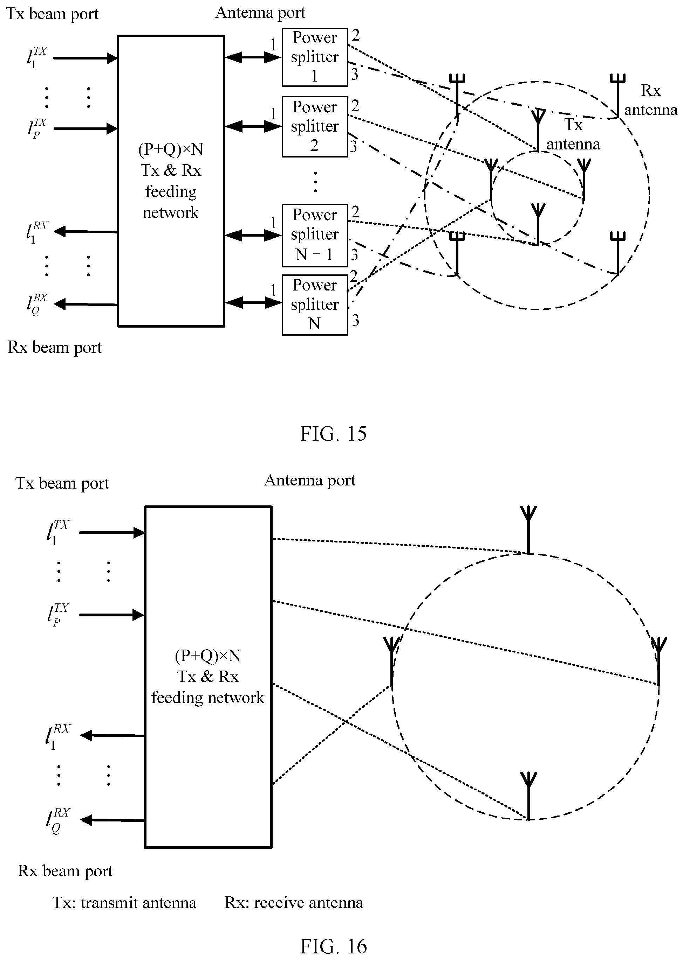

Embodiment 5: As shown in FIG. 15, the transmitter feeding network and the receiver feeding network share a same feeding network, and a radius of the transmit UCA and a radius of the receive UCA are different, and the transmit UCA and the receive UCA use independent antenna arrays. The full-duplex communication apparatus performs the following method procedure:

For step 1, refer to step 1 in Embodiment 1.
For step 2, refer to step 2 in Embodiment 4.
For step 3, refer to step 3 in Embodiment 2.
For step 4, refer to step 4 in Embodiment 4.
For step 5, refer to step 5 in Embodiment 1.

Embodiment 6: As shown in FIG. 16, the transmitter feeding network and the receiver feeding network share a same feeding network, and a radius of the transmit UCA and a radius of the receive UCA are the same, and the transmit UCA and the receive UCA share an antenna array. The full-duplex communication apparatus performs the following method procedure:

For step 1, refer to step 1 in Embodiment 1.
For step 2, refer to step 2 in Embodiment 4.
For step 3, refer to step 3 in Embodiment 3.

Step 4: Respectively connect N antenna ports of the feeding network to N antennas of the UCA.

For step 5, refer to step 5 in Embodiment 1.

In an actual application, the transmitter radio frequency link and the receiver radio frequency link may further include some other physical components or functional modules. For easier understanding of the solution, in the embodiments of this application, an example in which the full-duplex apparatus is a network device or is applied to a network device is used to provide a more comprehensive apparatus structure description.

An added physical component or functional module may be added based on any full-duplex communication apparatus architecture in FIG. 8 to FIG. 16. The following describes a more comprehensive apparatus structure in detail by using the apparatus architecture shown in FIG. 8 as an example.

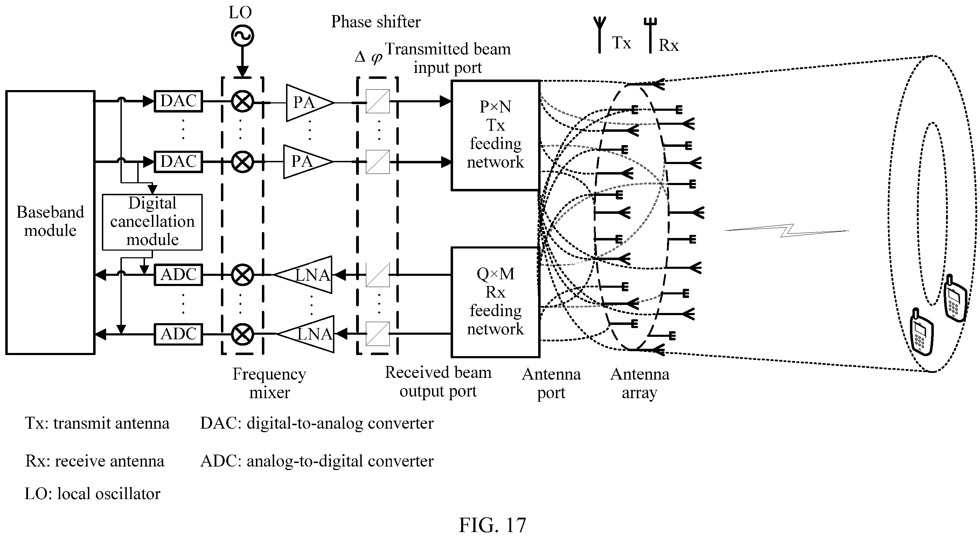

As shown in FIG. 17, the full-duplex communication apparatus may further include the following several physical components or functional modules, or in other words, the full-duplex communication apparatus may be further connected to the following several physical components or functional modules: a baseband unit (BaseBand Unit, BBU), a digital cancellation module, a digital-to-analog converter (Digital-to-Analog Converter, DAC), an analog-to-digital converter (Analog-to-Digital Converter, ADC), a local oscillator (Local Oscillator, LO), or a frequency mixer. The baseband module is connected to the digital cancellation module, the DAC and the ADC are located between the baseband module and the frequency mixer, and the LO is connected to the frequency mixer.

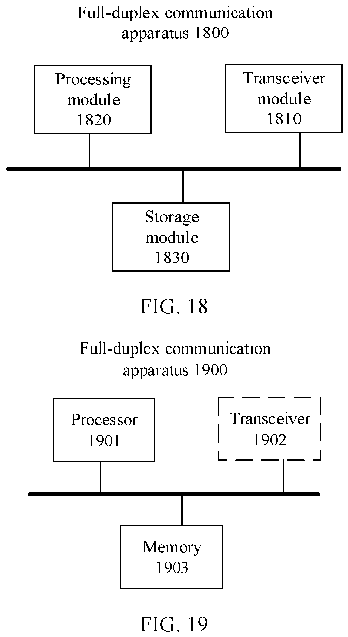

The full-duplex communication apparatus may further include a PA and/or an LNA. The PA and/or the LNA are/is located between the frequency mixer and the phase shifter; or the PA and/or the LNA are/is located between the phase shifter and the feeding network. The PA and/or the LNA shown in FIG. 17 are located between the frequency mixer and the phase shifter. The following briefly describes a structure and a working procedure of the full-duplex communication apparatus shown in FIG. 19.

The full-duplex communication apparatus includes a baseband module, a digital cancellation module, a DAC, an ADC, an LO, a frequency mixer, a PA, an LNA, a phase shifter, a transmitter (Transmitter, Tx) feeding network, a receiver (Receiver, Rx) feeding network, and an antenna array.

In a transmitter radio frequency link, an output end of the baseband module is connected to the digital cancellation module, the output end of the baseband module is connected to the frequency mixer through the DAC, an output end of the local oscillator is connected to the frequency mixer, the frequency mixer is connected to the PA, an output end of the PA is connected to the phase shifter, an output end of the phase shifter is connected to a beam port of the transmitter feeding network, and an antenna port of the transmitter feeding network is connected to a transmit antenna in the antenna array. In a receiver radio frequency link, a receive antenna in the antenna array is connected to an antenna port of the receiver feeding network, a beam port of the receiver feeding network is connected to the phase shifter, the phase shifter is connected to the LNA, an output end of the LNA is connected to the frequency mixer, an output end of the local oscillator is connected to the frequency mixer, the frequency mixer is connected to an input end of the baseband module through the ADC, and an output end of the digital cancellation module is connected to the input end of the baseband module.

The baseband module is configured for baseband transmission and processing of a received digital signal. The ADC is configured to convert an analog signal into a digital signal. The DAC is configured to convert a digital signal into an analog signal. The digital cancellation module is configured to perform an operation of a self-interference cancellation algorithm in a digital domain. The local oscillator is configured to generate a signal at a fixed frequency. The frequency mixer is configured to up-convert a transmitted baseband signal into a radio frequency signal, and down-convert a received radio frequency signal into a baseband signal. The PA is configured to increase power of transmitting a radio frequency signal. The LNA is configured to amplify a received radio frequency signal. The phase shifter is configured to change a phase of a radio frequency signal. The transmitter feeding network is configured to generate a transmitted radio frequency signal of a specific amplitude and phase. The receiver feeding network is configured to superpose received radio frequency signals received on different antenna ports. The transmit antenna is configured to radiate a radio frequency signal to free space. The receive antenna is configured to detect a radio frequency signal in free space.

For example, in a full-duplex communication process, a transmitted digital signal output by the baseband module is converted into a baseband-transmitted analog signal by the DAC. The baseband-transmitted analog signal is up-converted into a transmitted radio frequency signal by the frequency mixer. After the transmitted radio frequency signal passes through the PA, a signal amplitude is enhanced. After the enhanced transmitted radio frequency signal passes through the phase shifter and the transmitter feeding network, radio frequency signals with a same amplitude but specific phase distribution are generated at different antenna ports. The radio frequency signals with different phases are radiated into free space through different transmit antennas and superposed in the free space to generate OAM beams in specific modes. When a plurality of transmitter radio frequency links simultaneously transmit signals, OAM beams in a plurality of modes are simultaneously transmitted in the free space, and energy is converged to a region in which a far-field terminal device is located. Receive antennas simultaneously receive the signals transmitted by the full-duplex communication apparatus and a signal transmitted by the far-field terminal device. Because the signals transmitted by the full-duplex communication apparatus and received by different receive antennas have specific phase distribution, the signals add up to zero after superposed by the receiver feeding network, and are not output from beam ports, thereby implementing self-interference cancellation. The terminal device transmits a common beam, and radio frequency signals received by the receive antennas are output from beam ports after superposed by the receiver feeding network. The radio frequency signal output by the beam port of the receiver feeding network has a phase changed by the phase shifter and a signal amplitude enhanced by the LNA, and is down-converted by the frequency mixer into a baseband-received analog signal. After passing through the ADC, the baseband-received analog signal is converted into a baseband-received digital signal. Residual interference of the baseband-transmitted digital signal is evaluated by using the digital cancellation module, which is superposed with the baseband-received digital signal to further reduce self-interference. The baseband-received digital signal after self-interference cancellation in the digital domain is input to the baseband module for baseband processing.

It can be learned that, in a process of implementing self-interference cancellation, the full-duplex communication apparatus does not conflict with algorithms of analog self-interference cancellation and digital self-interference cancellation, and the analog cancellation module and the digital cancellation module may be integrated into the full-duplex communication apparatus to further eliminate a self-interference signal.

In this embodiment of this application, multi-antenna self-interference cancellation may be implemented in combination with an existing MIMO technology, to eliminate a self-interference signal without increasing system complexity, and increase isolation between transmit and received beam ports, thereby implementing full-duplex communication.

In this embodiment of this application, in a beamforming process, a problem of an energy hole in a beam center direction of the array antenna may be avoided, and three-dimensional beamforming and beam scanning are implemented by concentrating beam energy to a specific direction.

In addition, this embodiment of this application may be applied to not only full-duplex communication in various frequency bands (such as Sub-6G, high frequency, THz) of wireless communication, but also full-duplex communication in optical fiber communication, visible light communication, and the like.

It should be noted that the full-duplex communication apparatus shown in FIG. 17 and the full-duplex communication apparatus shown in FIG. 8 are different only in schematic forms, and essences or design ideas of the two are the same. Therefore, the designs of the implementations of the full-duplex communication apparatus in FIG. 11 to FIG. 16 may be applied to the full-duplex communication apparatus shown in FIG. 17.

It may be understood that, when no conflict occurs, embodiments in this application may be used in combination or may be used separately.

Based on the foregoing description of the principle of the full-duplex communication method, the following describes in detail another possible full-duplex communication apparatus provided in an embodiment of this application. As shown in FIG. 18, a full-duplex communication apparatus 1800 is provided. The full-duplex communication apparatus 1800 can perform steps of the method in FIG. 10. To avoid repetition, details are not described herein again. The full-duplex communication apparatus 1800 includes a transceiver module 1810, and optionally, further includes a processing module 1820 and a storage module 1830. The processing module 1820 may be connected to the storage module 1830 and the transceiver module 1810, and the storage module 1830 may also be connected to the transceiver module 1810.

The storage module 1830 is configured to store a computer program.

For example, the processing module 1820 is configured to transmit transmitted beams in different OAM states by using a transmit antenna array, where the transmit antenna array is a UCA; receive received beams in different OAM states by using a receive antenna array, where the receive antenna array is a UCA, an antenna array includes the transmit antenna array and the receive antenna array, the antenna array meets a preset condition, and the preset condition includes: a quantity of transmit antennas of the transmit antenna array is equal to a quantity of receive antennas of the receive antenna array, and the OAM states of the transmitted beams are not equal to opposite numbers of the OAM states of the received beams; and feed the transmit antenna array and synthesize signals received by the receive antenna array by using a feeding network.

In an implementation, absolute values of the OAM states of the transmitted beams are less than a half of the quantity of transmit antennas; and absolute values of the OAM states of the received beams are less than a half of the quantity of receive antennas.

In an implementation, an OAM state of each transmitted beam meets the following condition:

$$L_{TX} = \left[ l_1^{TX}, l_2^{TX}, \cdots, l_p^{TX}, \ldots, l_P^{TX} \right]^T$$, where p represents a p$^{th}$ transmitted beam, $l_p^{TX}$ represents an OAM state of the p$^{th}$ transmitted beam, P represents a quantity of transmitted beams, p is a positive integer less than or equal to P, and P is a positive integer.

In an implementation, an OAM state of each received beam meets the following condition:

$$L_{RX} = \left[ l_1^{RX}, l_2^{RX}, \cdots, l_q^{RX}, \ldots, l_Q^{RX} \right]^T$$, where q represents a q$^{th}$ received beam, $l_q^{RX}$ represents an OAM state of the q$^{th}$ received beam, Q represents a quantity of received beams, q is a positive integer less than or equal to Q, and Q is a positive integer.

In an implementation, the processing module 1820 is further configured to adjust a phase of each transmit antenna in the transmit antenna array. A phase of an n$^{th}$ transmit antenna in each transmit antenna is determined based on the OAM states of the transmitted beams and the quantity N of transmit antennas of the transmit antenna array, n is a positive integer less than or equal to N, and N is a positive integer.

In an implementation, the processing module 1820 is further configured to adjust a phase of each receive antenna in the receive antenna array. A phase of an m$^{th}$ receive antenna in each receive antenna is determined based on the OAM states of the received beams and the quantity M of receive antennas of the receive antenna array, m is a positive integer less than or equal to M, and M is a positive integer.

In an implementation, all elements of a transmission matrix between a transmitted beam input port of the feeding network and a received beam output port of the feeding network are 0.

In an implementation, the processing module 1820 is specifically configured to simultaneously generate a plurality of transmitted beams in continuous OAM states by using the transmit antenna array. A beam width of a beam formed by superposing the plurality of transmitted beams in space is inversely proportional to a quantity of excited transmitted beams.

In an implementation, the processing module 1820 is further configured to adjust an initial phase of the transmitted beams and/or the received beams by using a phase shifter. The feeding network is located between the phase shifter and the transmit antenna array, and the feeding network is located between the phase shifter and the receive antenna array.

In an implementation, if P transmitted beams in OAM states are generated simultaneously, a far-field electric field of the P transmitted beams in the OAM states is determined based on a radius of the transmit UCA, the OAM states of the transmitted beams, and the initial phase of the OAM states of the transmitted beams and the received beams.

In an implementation, the processing module 1820 is further configured to adjust a degree of $\theta$ of a main lobe of the transmitted beam and/or a degree of $\varphi$ of the main lobe of the transmitted beam by using the feeding network.

In an implementation, the processing module 1820 is further configured to adjust a quantity of main lobes of the transmitted beam by using the feeding network.

FIG. 19 is a schematic block diagram of a full-duplex communication apparatus 1900 according to an embodiment of this application. It should be understood that the full-duplex communication apparatus 1900 can perform steps of the method in FIG. 8. To avoid repetition, details are not described herein again. The full-duplex communication apparatus 1900 includes a processor 1901 and a memory 1903. The processor 1901 and the memory 1903 are electrically coupled. The memory 1903 is configured to store computer program instructions.

The processor 1901 is configured to execute some or all of the computer program instructions in the memory, and when the some or all of the computer program instructions are executed, the apparatus implements method performed by the terminal in the foregoing embodiments.

Optionally, the apparatus further includes a transceiver 1902, configured to communicate with another device, for example, generate transmitted beams in OAM states by using a transmit antenna array.

It should be understood that the full-duplex communication apparatus 1900 shown in FIG. 19 may be a chip or a circuit. For example, the chip or the circuit may be disposed in a network device. The transceiver 1902 may alternatively be a communications interface. The transceiver includes a receiver and a transmitter. Further, the full-duplex communication apparatus 1900 may further include a bus system.

The processor 1901, the memory 1903, and the transceiver 1902 are connected by using the bus system. The processor 1901 is configured to execute the instructions stored in the memory 1903, to control the transceiver to receive a signal and send a signal, to complete steps in the full-duplex communication method in this application. The memory 1903 may be integrated into the processor 1901, or may be disposed separately from the processor 1901.

In an implementation, it may be considered that functions of the transceiver 1902 are implemented by using a transceiver circuit or a dedicated transceiver chip. It may be considered that the processor 1901 may be implemented by using a dedicated processing chip, a processing circuit, a processor, or a general-purpose chip.

The processor may be a central processing unit (central processing unit, CPU), a network processor (network processor, NP), or a combination of a CPU and an NP.

The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), general array logic (generic array logic, GAL) and another programmable logic device, a discrete gate or transistor logic device, a discrete hardware component, or any combination thereof. The general-purpose processor may be a microprocessor, or the processor may be any conventional processor, or the like.

It may be further understood that the memory mentioned in embodiments of this application may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

An embodiment of this application provides a computer storage medium, storing a computer program. The computer program includes instructions for performing the full-duplex communication method.

An embodiment of this application provides a computer program product including instructions. When the computer program product runs on a computer, the computer is enabled to perform the full-duplex communication method provided above.

A person of ordinary skill in the art may be aware that, in combination with the examples described in the embodiments disclosed in this specification, units and algorithm steps may be implemented by electronic hardware or a combination of computer software and electronic hardware. Whether the functions are performed by the hardware or the software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described systems, apparatuses, and units, refer to a corresponding process in the foregoing method embodiment. Details are not described herein again.

In embodiments provided in this application, it should be understood that the described apparatus embodiments are merely examples. For example, the unit division is merely logical function division and may be other division in actual implementation, for example, a plurality of units or components may be combined or integrated into another system, or some features may be ignored or not performed. In addition, the displayed or discussed mutual communication connections may be implemented through some interfaces. The indirect couplings or communication connections between the apparatuses or units may be implemented in electronic, mechanical, or other forms.

In addition, units in the apparatus embodiments of this application may be integrated into one processing unit, or each of the units may exist alone physically, or two or more units may be integrated into one unit.

It may be understood that the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

## EP 4 087 061 B1

All or some of the methods in embodiments of this application may be implemented by software, hardware, firmware, or any combination thereof. When software is used for implementation, all or some of the embodiments may be implemented in a form of a computer program product. The computer program product includes one or more computer programs or instructions. When the computer programs or instructions are loaded and executed on the computer, the procedure or functions according to the embodiments of this application are completely or partially generated. The computer may be a general-purpose computer, a dedicated computer, a computer network, or another programmable apparatus. The computer programs or instructions may be stored in a computer-readable storage medium, or may be transmitted by using the computer-readable storage medium. The computer-readable storage medium may be any usable medium accessible by a computer, or a data storage device, such as a server, integrating one or more usable media. The usable medium may be a magnetic medium such as a floppy disk, a hard disk, or a magnetic tape, or may be an optical medium such as a CD-ROM or a DVD, or may be a semiconductor medium such as a solid-state drive (solid-state disk, SSD), a random access memory (random access memory, RAM), a read-only memory (read-only memory, ROM), or a register.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Although some preferred embodiments of this application have been described, persons skilled in the art can make changes and modifications to these embodiments once they learn of the basic inventive concept. Therefore, the following claims are intended to be construed as to cover the preferred embodiments and all changes and modifications falling within the scope of this application.

Obviously, persons skilled in the art can make various modifications and variations to the embodiments of this application. This application is also intended to cover these modifications and variations to embodiments of this application provided that the modifications and variations fall within the scope of protection defined by the following claims.

### Claims

1.  A full-duplex communication method, comprising:

transmitting (S601) transmitted beams in different orbital angular momentum OAM states by using a transmit antenna array, wherein the transmit antenna array is a uniform circular array UCA;
receiving (S602) received beams in different OAM states by using a receive antenna array, wherein the receive antenna array is a UCA, and an antenna array (803) comprises the transmit antenna array and the receive antenna array, wherein
the antenna array (803) meets a preset condition, and the preset condition comprises: a quantity of transmit antennas of the transmit antenna array is equal to a quantity of receive antennas of the receive antenna array, and the OAM states of the transmitted beams are not equal to opposite numbers of the OAM states of the received beams; and

feeding (S603) the transmit antenna array and synthesizing signals of the receive antenna array by using a feeding network (802).

2. The method according to claim 1, wherein the preset condition further comprises: absolute values of the OAM states of the transmitted beams are less than a half of the quantity of transmit antennas; and

absolute values of the OAM states of the received beams are less than a half of the quantity of receive antennas.

3. The method according to claim 1 or 2, wherein an OAM state of each transmitted beam meets the following condition:

$$L_{TX} = \left[l_1^{TX}, l_2^{TX}, \cdots, l_p^{TX}, \ldots, l_P^{TX}\right]^T,$$

wherein p represents a p$^{th}$ transmitted beam, $l_p^{TX}$ represents an OAM state of the p$^{th}$ transmitted beam, P represents a quantity of transmitted beams, p is a positive integer less than or equal to P, and P is a positive integer.

4. The method according to any one of claims 1 to 3, wherein an OAM state of each received beam meets the following condition:

$$L_{RX} = \left[l_1^{RX}, l_2^{RX}, \cdots, l_q^{RX}, \ldots, l_Q^{RX}\right]^T,$$

wherein q represents a q$^{th}$ received beam, $l_q^{RX}$ represents an OAM state of the q$^{th}$ received beam, Q represents a quantity of received beams, q is a positive integer less than or equal to Q, and Q is a positive integer.

5. The method according to any one of claims 1 to 4, wherein before the transmitting transmitted beams in different OAM states by using a transmit antenna array, the method further comprises:

adjusting a phase of each transmit antenna in the transmit antenna array, wherein a phase of an n$^{th}$ transmit antenna in the transmit antenna array is determined based on the OAM states of the transmitted beams and the quantity N of transmit antennas of the transmit antenna array, n is a positive integer less than or equal to N, and N is a positive integer.

6. The method according to any one of claims 1 to 5, wherein before the receiving received beams in different OAM states by using a receive antenna array, the method further comprises:

adjusting a phase of each receive antenna in the receive antenna array, wherein a phase of an m$^{th}$ receive antenna in the receive antenna array is determined based on the OAM states of the received beams and the quantity M of receive antennas of the receive antenna array, m is a positive integer less than or equal to M, and M is a positive integer.

7. The method according to any one of claims 1 to 6, wherein all elements of a transmission matrix between a transmitted beam input port of the feeding network (802) and a received beam output port of the feeding network (802) are 0.

8. The method according to any one of claims 1 to 7, wherein the method further comprises:

simultaneously generating a plurality of transmitted beams in continuous OAM states by using the transmit antenna array, wherein a beam width of a beam formed by superposing the plurality of transmitted beams in space is inversely proportional to a quantity of excited transmitted beams.

9. The method according to any one of claims 1 to 8, wherein the method further comprises:

adjusting an initial phase of the transmitted beams and/or the received beams by using a phase shifter (801), wherein the feeding network (802) is located between the phase shifter (801) and the transmit antenna array, and the feeding network (802) is located between the phase shifter (801) and the receive antenna array.

10. The method according to any one of claims 1 to 9, wherein if P transmitted beams in OAM states are generated simultaneously, a far-field electric field of the P transmitted beams in the OAM states is determined based on a radius of the transmit UCA, the OAM states of the transmitted beams, and the initial phase of the OAM states of the transmitted beams and the received beams.

11. The method according to any one of claims 1 to 10, wherein the method further comprises:
adjusting a degree of $\theta$ of a main lobe of the transmitted beam and/or a degree of $\varphi$ of the main lobe of the transmitted beam by using the feeding network (802).

12. The method according to any one of claims 1 to 11, wherein the method further comprises:
adjusting a quantity of main lobes of the transmitted beam by using the feeding network (802).

13. A full-duplex communication apparatus, comprising a phase shifter (801), a feeding network (802), and an antenna array (803), wherein the feeding network (802) is located between the phase shifter (801) and the antenna array (803), and the antenna array (803) comprises a transmit antenna array and a receive antenna array;

the antenna array (803) is a uniform circular array UCA, and the UCA is configured to transmit transmitted beams in different orbital angular momentum OAM states and receive received beams in different OAM states; and the antenna array (803) meets a preset condition, and the preset condition comprises: a quantity of transmit antennas of the transmit antenna array is equal to a quantity of receive antennas of the receive antenna array, and the OAM states of the transmitted beams are not equal to opposite numbers of the OAM states of the received beams.

14. The apparatus according to claim 13, wherein the preset condition further comprises:

absolute values of the OAM states of the transmitted beams are less than a half of the quantity of transmit antennas; and
absolute values of the OAM states of the received beams are less than a half of the quantity of receive antennas.

15. The apparatus according to claim 13 or 14, wherein the transmit UCA and the receive UCA are concentrically and coaxially placed, and a radius of the transmit UCA is the same as or different from a radius of the receive UCA.

**Patentansprüche**

1. Vollduplex-Kommunikationsverfahren, umfassend:

Senden (S601) von Sendestrahlen in verschiedenen Bahndrehimpulszuständen, OAM-Zuständen, durch Verwenden einer Sendeantennengruppe, wobei die Sendeantennengruppe eine gleichmäßige kreisförmige Gruppe, UCA, ist;
Empfangen (S602) von Empfangsstrahlen in verschiedenen OAM-Zuständen durch Verwenden einer Empfangsantennengruppe, wobei die Empfangsantennengruppe eine UCA ist und eine Antennengruppe (803) die Sendeantennengruppe und die Empfangsantennengruppe umfasst, wobei
die Antennengruppe (803) eine vorab festgelegte Bedingung erfüllt und die vorab festgelegte Bedingung Folgendes umfasst: eine Menge von Sendeantennen der Sendeantennengruppe ist gleich einer Menge von Empfangsantennen der Empfangsantennengruppe und die OAM-Zustände der Sendestrahlen sind nicht gleich entgegengesetzten Zahlen der OAM-Zustände der Empfangsstrahlen; und
Speisen (S603) der Sendeantennengruppe und Synthetisieren von Signalen der Empfangsantennengruppe durch Verwenden eines Speisenetzwerks (802).

2. Verfahren nach Anspruch 1, wobei die vorab festgelegte Bedingung ferner Folgendes umfasst: absolute Werte der OAM-Zustände der Sendestrahlen sind kleiner als eine Hälfte der Menge von Sendeantennen; und
absolute Werte der OAM-Zustände der Empfangsstrahlen sind kleiner als eine Hälfte der Menge von Empfangsantennen.

3. Verfahren nach Anspruch 1 oder 2, wobei ein OAM-Zustand jedes Sendestrahls die folgende Bedingung erfüllt:

$$L_{TX} = \left[ l_1^{TX}, l_2^{TX}, \ldots, l_p^{TX}, \ldots l_P^{TX} \right]^T,$$

wobei p einen p-ten Sendestrahl darstellt, $l_p^{TX}$ einen OAM-Zustand des p-ten Sendestrahls darstellt, P eine Menge von Sendestrahlen darstellt, p eine positive ganze Zahl kleiner als oder gleich P ist und P eine positive ganze Zahl ist.

4. Verfahren nach einem der Ansprüche 1 bis 3, wobei ein OAM-Zustand jedes Empfangsstrahls die folgende Bedingung erfüllt:

$$L_{RX} = \left[ l_1^{RX}, l_2^{RX}, ..., l_q^{RX}, ... l_Q^{RX} \right]^T,$$

wobei q einen q-ten Empfangsstrahl darstellt, $l_q^{RX}$ einen OAM-Zustand des q-ten Empfangsstrahls darstellt, Q eine Menge von Empfangsstrahlen darstellt, q eine positive ganze Zahl kleiner als oder gleich Q ist und Q eine positive ganze Zahl ist.

5. Verfahren nach einem der Ansprüche 1 bis 4, wobei das Verfahren vor dem Senden von Sendestrahlen in verschiedenen OAM-Zuständen durch Verwenden einer Sendeantennengruppe ferner Folgendes umfasst:
Anpassen einer Phase jeder Sendeantenne in der Sendeantennengruppe, wobei eine Phase einer n-ten Sendeantenne in der Sendeantennengruppe basierend auf den OAM-Zuständen der Sendestrahlen und der Menge N von Sendeantennen der Sendeantennengruppe bestimmt wird, n eine positive ganze Zahl kleiner als oder gleich N ist und N eine positive ganze Zahl ist.

6. Verfahren nach einem der Ansprüche 1 bis 5, wobei das Verfahren vor dem Empfangen von Empfangsstrahlen in verschiedenen OAM-Zuständen durch Verwenden einer Empfangsantennengruppe ferner Folgendes umfasst:
Anpassen einer Phase jeder Empfangsantenne in der Empfangsantennengruppe, wobei eine Phase einer m-ten Empfangsantenne in der Empfangsantennengruppe basierend auf den OAM-Zuständen der Empfangsstrahlen und der Menge M von Empfangsantennen der Empfangsantennengruppe bestimmt wird, m eine positive ganze Zahl kleiner als oder gleich M ist und M eine positive ganze Zahl ist.

7. Verfahren nach einem der Ansprüche 1 bis 6, wobei alle Elemente einer Übertragungsmatrix zwischen einem Sendestrahleingangsanschluss des Speisenetzwerks (802) und einem Empfangsstrahlausgangsanschluss des Speisenetzwerks (802) 0 sind.

8. Verfahren nach einem der Ansprüche 1 bis 7, wobei das Verfahren ferner Folgendes umfasst:
simultanes Erzeugen einer Mehrzahl von Sendestrahlen in kontinuierlichen OAM-Zuständen durch Verwenden der Sendeantennengruppe, wobei eine Strahlbreite eines durch Überlagern der Mehrzahl von Sendestrahlen im Raum gebildeten Strahls umgekehrt proportional zu einer Menge angeregter Sendestrahlen ist.

9. Verfahren nach einem der Ansprüche 1 bis 8, wobei das Verfahren ferner Folgendes umfasst:
Anpassen einer Anfangsphase der Sendestrahlen und/oder der Empfangsstrahlen durch Verwenden eines Phasenschiebers (801), wobei das Speisenetzwerk (802) sich zwischen dem Phasenschieber (801) und der Sendeantennengruppe befindet und das Speisenetzwerk (802) sich zwischen dem Phasenschieber (801) und der Empfangsantennengruppe befindet.

10. Verfahren nach einem der Ansprüche 1 bis 9, wobei, falls P Sendestrahlen in OAM-Zuständen simultan erzeugt werden, ein elektrisches Fernfeld der P Sendestrahlen in den OAM-Zuständen basierend auf einem Radius der Sende-DCA, den OAM-Zuständen der Sendestrahlen und der Anfangsphase der OAM-Zustände der Sendestrahlen und der Empfangsstrahlen bestimmt wird.

11. Verfahren nach einem der Ansprüche 1 bis 10, wobei das Verfahren ferner Folgendes umfasst:
Anpassen eines Grades von $\theta$ einer Hauptkeule des Sendestrahls und/oder eines Grades von $\varphi$ der Hauptkeule des Sendestrahls durch Verwenden des Speisenetzwerks (802).

12. Verfahren nach einem der Ansprüche 1 bis 11, wobei das Verfahren ferner Folgendes umfasst:
Anpassen einer Menge von Hauptkeulen des Sendestrahls durch Verwenden des Speisenetzwerks (802).

13. Vollduplex-Kommunikationsvorrichtung, umfassend einen Phasenschieber (801), ein Speisenetzwerk (802) und eine Antennengruppe (803), wobei sich das Speisenetzwerk (802) zwischen dem Phasenschieber (801) und der Antennengruppe (803) befindet und die Antennengruppe (803) eine Sendeantennengruppe und eine Empfangsantennengruppe umfasst;

die Antennengruppe (803) eine gleichmäßige kreisförmige Gruppe, UCA, ist und die UCA zum Senden von Sendestrahlen in verschiedenen Bahndrehimpulszuständen, OAM-Zuständen, und Empfangen von Empfangsstrahlen in verschiedenen OAM-Zuständen ausgelegt ist; und

die Antennengruppe (803) eine vorab festgelegte Bedingung erfüllt und die vorab festgelegte Bedingung Folgendes umfasst: eine Menge von Sendeantennen der Sendeantennengruppe ist gleich einer Menge von Empfangsantennen der Empfangsantennengruppe und die OAM-Zustände der Sendestrahlen sind nicht gleich entgegengesetzten Zahlen der OAM-Zustände der Empfangsstrahlen.

**14.** Vorrichtung nach Anspruch 13, wobei die vorab festgelegte Bedingung ferner Folgendes umfasst:

absolute Werte der OAM-Zustände der Sendestrahlen sind kleiner als eine Hälfte der Menge von Sendeantennen; und
absolute Werte der OAM-Zustände der Empfangsstrahlen sind kleiner als eine Hälfte der Menge von Empfangsantennen.

**15.** Vorrichtung nach Anspruch 13 oder 14, wobei die Sende-UCA und die Empfangs-UCA konzentrisch und koaxial platziert sind und ein Radius der Sende-UCA gleich wie ein Radius der Empfangs-UCA oder verschieden davon ist.

**Revendications**

**1.** Procédé de communication bidirectionnelle simultanée, comprenant les étapes consistant à :

transmettre (S601) des faisceaux transmis dans différents états de moment angulaire orbital OAM au moyen d'un réseau d'antennes de transmission, le réseau d'antennes de transmission étant un réseau circulaire uniforme UCA ;
recevoir (S602) des faisceaux reçus dans différents états d'OAM au moyen d'un réseau d'antennes de réception, le réseau d'antennes de réception étant un UCA, et un réseau d'antennes (803) comprenant le réseau d'antennes de transmission et le réseau d'antennes de réception, dans lequel
le réseau d'antennes (803) vérifie une condition prédéfinie, et la condition prédéfinie comprend : une quantité d'antennes de transmission du réseau d'antennes de transmission est égale à une quantité d'antennes de réception du réseau d'antennes de réception, et les états d'OAM des faisceaux transmis ne sont pas égaux aux nombres opposés des états d'OAM des faisceaux reçus ; et
alimenter (S603) le réseau d'antennes de transmission et synthétiser les signaux du réseau d'antennes de réception au moyen d'un réseau d'alimentation (802).

**2.** Procédé selon la revendication 1, dans lequel la condition prédéfinie comprend également : les valeurs absolues des états d'OAM des faisceaux transmis sont inférieures à une moitié de la quantité d'antennes de transmission ; et les valeurs absolues des états d'OAM des faisceaux reçus sont inférieures à une moitié de la quantité d'antennes de réception.

**3.** Procédé selon la revendication 1 ou 2, dans lequel un état d'OAM de chaque faisceau transmis vérifie la condition suivante :

$$L_{TX} = \left[ l_1^{TX}, l_2^{TX}, \cdots, l_p^{TX}, \ldots, l_P^{TX} \right]^T ,$$

p représentant un p$^{ième}$ faisceau transmis, $l_p^{TX}$ représentant un état d'OAM du p$^{ième}$ faisceau transmis, P représentant une quantité de faisceaux transmis, p étant un entier positif inférieur ou égal à P, et P étant un entier positif.

**4.** Procédé selon l'une quelconque des revendications 1 à 3, dans lequel un état d'OAM de chaque faisceau reçu vérifie la condition suivante :

$$L_{RX} = \left[ l_1^{RX}, l_2^{RX}, \cdots, l_q^{RX}, \ldots, l_Q^{RX} \right]^T ,$$

q représentant un qième faisceau reçu, $l_q^{RX}$ représentant un état d'OAM du qième faisceau reçu, Q représentant une quantité de faisceaux reçus, q étant un entier positif inférieur ou égal à Q, et Q étant un entier positif.

5. Procédé selon l'une quelconque des revendications 1 à 4, le procédé, avant la transmission de faisceaux transmis dans différents états d'OAM au moyen d'un réseau d'antennes de transmission, comprenant également l'étape consistant à :
régler une phase de chaque antenne de transmission du réseau d'antennes de transmission, une phase d'une nième antenne de transmission du réseau d'antennes de transmission étant déterminée sur la base des états d'OAM des faisceaux transmis et de la quantité N d'antennes de transmission du réseau d'antennes de transmission, n étant un entier positif inférieur ou égal à N, et N étant un entier positif.

6. Procédé selon l'une quelconque des revendications 1 à 5, le procédé, avant la réception de faisceaux reçus dans différents états d'OAM au moyen d'un réseau d'antennes de réception, comprenant également l'étape consistant à :
régler une phase de chaque antenne de réception du réseau d'antennes de réception, une phase d'une mième antenne de réception du réseau d'antennes de réception étant déterminée sur la base des états d'OAM des faisceaux reçus et de la quantité M d'antennes de réception du réseau d'antennes de réception, m étant un entier positif inférieur ou égal à M, et M étant un entier positif.

7. Procédé selon l'une quelconque des revendications 1 à 6, dans lequel tous les éléments d'une matrice de transmission entre un port d'entrée de faisceaux transmis du réseau d'alimentation (802) et un port de sortie de faisceaux reçus du réseau d'alimentation (802) sont égaux à 0.

8. Procédé selon l'une quelconque des revendications 1 à 7, le procédé comprenant également l'étape consistant à :
générer simultanément une pluralité de faisceaux transmis dans des états d'OAM continus au moyen du réseau d'antennes de transmission, une largeur de faisceau d'un faisceau formé par superposition de la pluralité de faisceaux transmis dans l'espace étant inversement proportionnelle à une quantité de faisceaux transmis excités.

9. Procédé selon l'une quelconque des revendications 1 à 8, le procédé comprenant également l'étape consistant à :
régler une phase initiale des faisceaux transmis et/ou des faisceaux reçus au moyen d'un déphaseur (801), le réseau d'alimentation (802) étant situé entre le déphaseur (801) et le réseau d'antennes de transmission, et le réseau d'alimentation (802) étant situé entre le déphaseur (801) et le réseau d'antennes de réception.

10. Procédé selon l'une quelconque des revendications 1 à 9, dans lequel, si P faisceaux transmis dans des états d'OAM sont générés simultanément, un champ électrique en champ lointain des P faisceaux transmis dans les états d'OAM est déterminé sur la base d'un rayon de l'UCA de transmission, des états d'OAM des faisceaux transmis et de la phase initiale des états d'OAM des faisceaux transmis et des faisceaux reçus.

11. Procédé selon l'une quelconque des revendications 1 à 10, le procédé comprenant également l'étape consistant à :
régler un degré $\theta$ d'un lobe principal du faisceau transmis et/ou un degré $\varphi$ du lobe principal du faisceau transmis au moyen du réseau d'alimentation (802).

12. Procédé selon l'une quelconque des revendications 1 à 11, le procédé comprenant également l'étape consistant à :
régler une quantité de lobes principaux du faisceau transmis au moyen du réseau d'alimentation (802).

13. Appareil de communication bidirectionnelle simultanée, comprenant un déphaseur (801), un réseau d'alimentation (802) et un réseau d'antennes (803), le réseau d'alimentation (802) étant situé entre le déphaseur (801) et le réseau d'antennes (803), et le réseau d'antennes (803) comprenant un réseau d'antennes de transmission et un réseau d'antennes de réception ;

le réseau d'antennes (803) étant un réseau circulaire uniforme DCA, et l'UCA étant configuré pour transmettre des faisceaux transmis dans différents états de moment angulaire orbital OAM et recevoir des faisceaux reçus dans différents états d'OAM ; et
le réseau d'antennes (803) vérifiant une condition prédéfinie, et la condition prédéfinie comprenant : une quantité d'antennes de transmission du réseau d'antennes de transmission est égale à une quantité d'antennes de réception du réseau d'antennes de réception, et les états d'OAM des faisceaux transmis ne sont pas égaux aux nombres opposés des états d'OAM des faisceaux reçus.

**14.** Appareil selon la revendication 13, dans lequel la condition prédéfinie comprend également :

les valeurs absolues des états d'OAM des faisceaux transmis sont inférieures à une moitié de la quantité d'antennes de transmission ; et
les valeurs absolues des états d'OAM des faisceaux reçus sont inférieures à une moitié de la quantité d'antennes de réception.

**15.** Appareil selon la revendication 13 ou 14, dans lequel l'UCA de transmission et l'UCA de réception sont disposés de façon concentrique et coaxiale, et un rayon de l'UCA de transmission est égal au rayon de l'UCA de réception ou bien en est différent.

FIG. 1

Tx: transmit antenna
Rx: receive antenna

FIG. 2

FIG. 3

FIG. 4

FIG. 5

S601

Transmit transmitted beams in different orbital angular momentum OAM states by using a transmit antenna array, where the transmit antenna array is a uniform circular array UCA

S602

Receive received beams in different orbital angular momentum OAM states by using a receive antenna array, where the receive antenna array is a uniform circular array UCA, an antenna array includes the transmit antenna array and the receive antenna array, the antenna array meets a preset condition, and the preset condition includes: a quantity of transmit antennas of the transmit antenna array is equal to a quantity of receive antennas of the receive antenna array, and the orbital angular momentum OAM states of the transmitted beams are not equal to opposite numbers of the orbital angular momentum OAM states of the received beams

S603

Feed the transmit antenna array and synthesize signals of the receive antenna array by using a feeding network

FIG. 6

FIG. 7

Phase shifter 801

Transmitted beam input port

Transmit antenna **Tx**

Receive antenna **Rx**

P×N Tx feeding network 802

Q×M Rx feeding network 802

Received beam output port

Antenna port

Antenna array 803

FIG. 8

Input end

$l_1^{TX}$
$l_2^{TX}$

$l_p^{TX}$

$l_P^{TX}$

Phase shifter

Phase shifter

3dB coupler 90°

3dB coupler 90°

3dB coupler 90°

3dB coupler 90°

3dB coupler 90°

3dB coupler 90°

3dB coupler 90°

3dB coupler 90°

3dB coupler 90°

3dB coupler 90°

3dB coupler 90°

3dB coupler 90°

3dB coupler 90°

3dB coupler 90°

3dB coupler 90°

3dB coupler 90°

Output end

$\varphi_{p.1}^{TX}$
$\varphi_{p.2}^{TX}$

$\varphi_{p.n}^{TX}$

$\varphi_{p.N}^{TX}$

Tx: transmit antenna     Rx: receive antenna     dB: decibel

FIG. 9

EP 4 087 061 B1

TX(n) $\beta_{TX(n),RX(m)}$
RX(m)

$\beta_{TX(n),RX(m)}$
TX(n) RX(m)

TX: transmit antenna
RX: receive antenna

(a)

(b)

FIG. 10

Tx beam port

Tx antenna port

Tx antenna

$l_1^{TX}$

P×N
Tx
feeding network

Rx antenna

$l_P^{TX}$

$l_1^{RX}$

Q×N
Rx
feeding network

$l_Q^{RX}$

Rx beam port

Rx antenna port

Tx: transmit antenna     Rx: receive antenna

FIG. 11

Tx beam port

Tx antenna port

$l_1^{TX}$

$\vdots$

$l_P^{TX}$

P×N
Tx
feeding network

$l_1^{RX}$

$\vdots$

$l_Q^{RX}$

Q×N
Rx
feeding network

Rx beam port

Rx antenna port

Rx antenna

Tx antenna

Tx: transmit antenna    Rx: receive antenna

FIG. 12

FIG. 13

FIG. 14

Tx beam port

Antenna port

$l_1^{TX}$

$l_P^{TX}$

(P+Q)×N
Tx & Rx
feeding
network

$l_1^{RX}$

$l_Q^{RX}$

Rx beam port

Power
splitter
1

Power
splitter
2

Power
splitter
N – 1

Power
splitter
N

Rx
antenna

Tx
antenna

FIG. 15

Tx beam port

Antenna port

$l_1^{TX}$

$l_P^{TX}$

(P+Q)×N
Tx & Rx
feeding network

$l_1^{RX}$

$l_Q^{RX}$

Rx beam port

Tx: transmit antenna     Rx: receive antenna

FIG. 16

FIG. 17

Tx: transmit antenna    DAC: digital-to-analog converter

Rx: receive antenna    ADC: analog-to-digital converter

LO: local oscillator

EP 4 087 061 B1

Full-duplex communication
apparatus 1800

```
┌─────────────┐        ┌─────────────┐
│ Processing  │        │ Transceiver │
│   module    │        │   module    │
│    1820     │        │    1810     │
└─────────────┘        └─────────────┘
       │                      │
━━━━━━━━━━━━━━━━━━━━━━━━━━━━━━━━━━━━━━━
              │
      ┌───────────────┐
      │   Storage     │
      │   module      │
      │    1830       │
      └───────────────┘
```

FIG. 18

Full-duplex communication
apparatus 1900

```
┌─────────────┐        ┌─ ─ ─ ─ ─ ─ ─┐
│  Processor  │        │ Transceiver │
│    1901     │        │    1902     │
└─────────────┘        └─ ─ ─ ─ ─ ─ ─┘
       │                      │
━━━━━━━━━━━━━━━━━━━━━━━━━━━━━━━━━━━━━━━
              │
      ┌───────────────┐
      │   Memory      │
      │    1903       │
      └───────────────┘
```

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016036270 A1

**Non-patent literature cited in the description**

- **ZHANG et al.** *Analyses and Full-Duplex Applications of Circularly Polarized OAM Arrays Using Sequentially Rotated Configuration*